(19) **Europäisches Patentamt / European Patent Office / Office européen des brevets**

(11) **EP 4 517 652 A1**

(12) **EUROPEAN PATENT APPLICATION**

(43) Date of publication:
05.03.2025 Bulletin 2025/10

(21) Application number: 24193664.0

(22) Date of filing: 08.08.2024

(51) International Patent Classification (IPC):
*G06T 5/60* (2024.01)    *G06N 3/045* (2023.01)

(52) Cooperative Patent Classification (CPC):
**G06T 5/60; G06N 3/045; G06N 3/084;**
G06T 2207/10016; G06T 2207/20081;
G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 29.08.2023 JP 2023139002

(71) Applicant: **CANON KABUSHIKI KAISHA**
**Tokyo 146-8501 (JP)**

(72) Inventor: **HORIKAWA, Yuta**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **INFORMATION PROCESSING APPARATUS, TRAINING APPARATUS, AND PROGRAM**

(57) By inputting a series of image data successive in a time series into a neural network configured to perform predetermined image processing on the image data sequentially, a first image processor (111) generates first image data after the image processing. For the first image data outputted from the first image processor sequentially in a time series, based on the neural network, a second image processor (112) generates second image data after the image processing. The second image processor generates the second image data corresponding to a first time by, as an input into the neural network at the first time, inputting: the first image data outputted from the first image processor at the first time or a second time earlier than the first time, and the second image data generated by the second image processor for the first image data outputted from the first image processor at the second time.

FIG. 2A

(Cont. next page)

# FIG. 2B

DATABASE UNIT — 121

IMAGE ACQUISITION UNIT — 110

DEGRADED IMAGE GENERATION UNIT — 122

FIRST NETWORK UNIT — 111

SECOND NETWORK UNIT — 112

DIFFERENCE CALCULATION UNIT — 123

ERROR CALCULATION UNIT — 124

TRAINING UNIT — 125

TRAINING APPARATUS

120

**Description**

BACKGROUND OF THE INVENTION

Field of the Invention

Some aspects of the embodiments relate to an information processing apparatus, a training apparatus, and a program.

Description of the Related Art

Recently, in image processing technologies for applying various kinds of manipulation to images such as still images or moving images (for example, image processing technologies for enhancing image quality), methods using neural networks have been being developed actively. An example of these methods is a method of realizing quality-enhancing image processing such as denoising, deblurring, or super-resolution by using a neural network. A method using a recurrent neural network in time-series processing for a movie, audio, or the like has also been proposed. A recurrent neural network has a recursive architecture that uses a feature amount that was generated through processing at the preceding time in time-series processing as an input for processing at the time that follows it, and is thus capable of performing feature-amount acquisition effective for the time-series processing.

"Efficient Multi-Stage Video Denoising with Recurrent Spatio-Temporal Fusion, Matteo Maggioni et al., 2021" discloses a technique for enhancing image quality by using a network that has a recursive architecture in denoising processing for a move.

In a technique of performing image processing on a movie by using a neural network, the image processing is sequentially applied to a series of frame images (still images) that constitute the movie, and the processed frame images are connected in a time series, thereby generating a processed movie.

When image processing is applied to a series of images that are successive in a time series as in a movie in this way, the following phenomenon could be observable: a phenomenon that artifacts arising in an object structure and at a background flat portion in the series of images look fluctuating. Techniques for suppressing such fluctuations manifested in a movie are disclosed in Japanese Patent Laid-Open Publication No. 2023-35928 and "TempFormer: Temporally Consistent Transformer for Video Denoising, Mingyang Song et al., 2022". However, a technique for better suppressing fluctuation manifestation is demanded.

SUMMARY OF THE INVENTION

The present disclosure in a first aspect provides an information processing apparatus as recited in claim 1. Preferable features of the first aspect of the present invention are specified in claims 2-8. These preferable features of the first aspect are also preferable features of the other aspects of the present invention. The present disclosure in a second aspect provides a training apparatus as recited in claim 9. Preferable features of the second aspect of the present invention are specified in claims 10-13. These preferable features of the second aspect are also preferable features of the other aspects of the present invention. The present disclosure in a third aspect provides a program as recited in claim 14. The present disclosure in a fourth aspect provides a program as recited in claim 15.

Further features of the present invention will become apparent from the following description of embodiments with reference to the attached drawings.

BRIEF DESCRIPTION OF THE DRAWINGS

Fig. 1 is a diagram illustrating an example of a hardware configuration of an information processing apparatus.
Fig. 2A is a diagram illustrating an example of a functional configuration of the information processing apparatus.
Fig. 2B is a diagram illustrating an example of a functional configuration of a training apparatus.
Fig. 3A is a diagram illustrating an example of a flowchart of the information processing apparatus.
Fig. 3B is a diagram illustrating an example of a flowchart of the training apparatus.
Fig. 4 is a diagram illustrating an example of a neural network configuration.
Fig. 5 is a diagram illustrating an example of a configuration of a first network unit.
Fig. 6 is a diagram illustrating an example of a configuration of a second network unit.
Fig. 7A is a diagram illustrating an example of a functional configuration of an information processing apparatus.
Fig. 7B is a diagram illustrating an example of a functional configuration of a training apparatus.

Fig. 8 is a diagram illustrating an example of a neural network configuration.
Fig. 9 is a diagram illustrating an example of a neural network configuration.
Fig. 10 is a diagram illustrating an example of a neural network configuration.
Fig. 11 is a diagram illustrating an example of a neural network configuration.

DESCRIPTION OF THE EMBODIMENTS

With reference to the accompanying drawings, some embodiments of the present disclosure will now be described in detail.

In this specification and drawings, the same reference signs are assigned to components having substantially the same functional configuration, thereby omitting a duplicative explanation. Note that each configuration disclosed in the embodiments below is just an example. The scope of the claims is not limited to the illustrated configurations.

First Embodiment

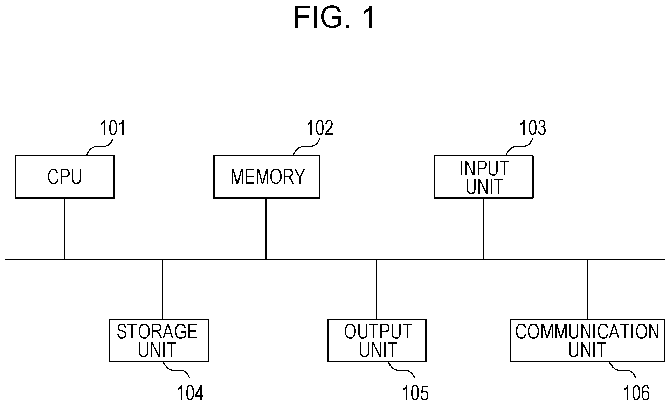

A first embodiment of the present disclosure will now be described. First, with reference to Fig. 1, an example of a hardware configuration of an information processing apparatus 100 according to the present embodiment will now be described. The information processing apparatus 100 includes a central processing unit (CPU) 101, a memory 102, an input unit 103, a storage unit 104, an output unit 105, and a communication unit 106. These components of the information processing apparatus 100 are interconnected such that transmission and reception of information can be performed therebetween via a bus.

By loading various programs stored in the storage unit 104, etc. onto the memory 102 and then running the loaded programs, the CPU 101 performs overall operational control on the information processing apparatus 100 and implements functions offered by the information processing apparatus 100. The memory 102 is used also as a storage area for storing various data temporarily, for example, as a work area of the CPU 101. The memory 102 can be embodied by, for example, a random access memory (RAM) or the like. The storage unit 104 is a storage area for storing various programs and various data. The storage unit 104 can be embodied by, for example, an auxiliary storage such as a read only memory (ROM), a hard disk drive (HDD), or the like.

The input unit 103 plays a role of an input interface configured to receive instructions from a user. The input unit 103 can be embodied by, for example, an input device such as a mouse, a keyboard, a touch panel, or the like.

The output unit 105 plays a role of an output interface configured to present various kinds of information to the user. The configuration of the output unit 105 may vary depending on a method of outputting information. For example, the output unit 105 may be embodied by a displaying device such as a display and may display information that is to be presented at a predetermined display area in the form of an image. As another example, the output unit 105 may be embodied by an audio outputting device such as speakers and may output information that is to be presented in the form of audio such as voice or electronic sound.

The communication unit 106 plays a role of a communication interface configured to connect the information processing apparatus 100 to a network such as the Internet or a local area network (LAN). The configuration of the communication unit 106 may vary depending on the type of the network to be connected and/or a communication scheme employed.

A training apparatus 120 according to the present embodiment has substantially the same hardware configuration as that of the information processing apparatus 100 described above. Therefore, a detailed explanation thereof is not given.

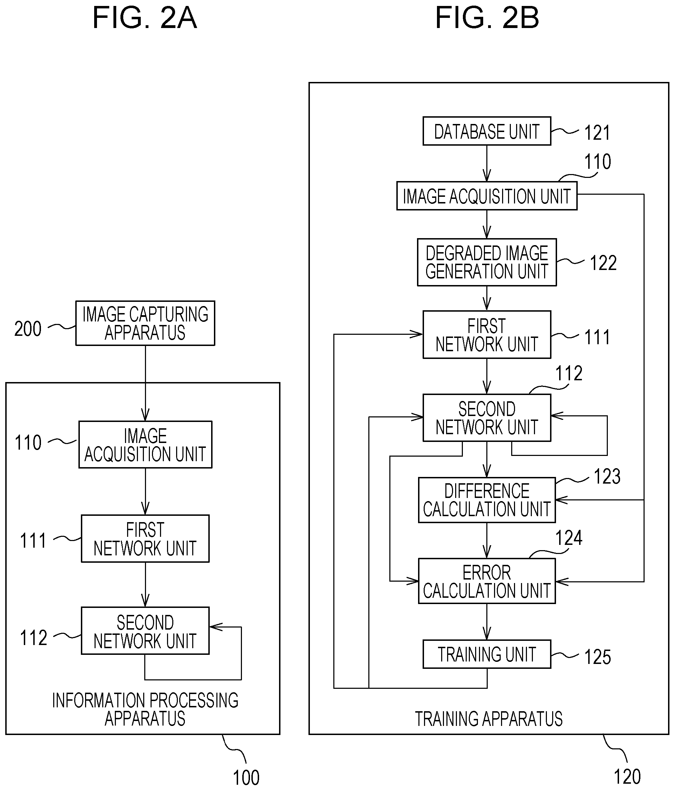

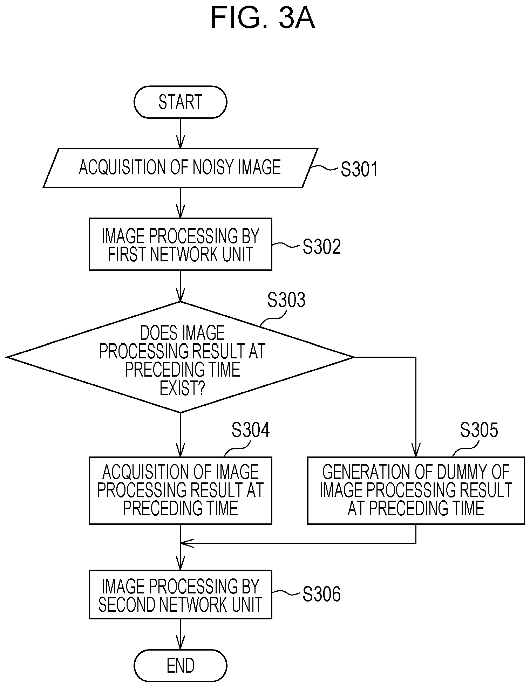

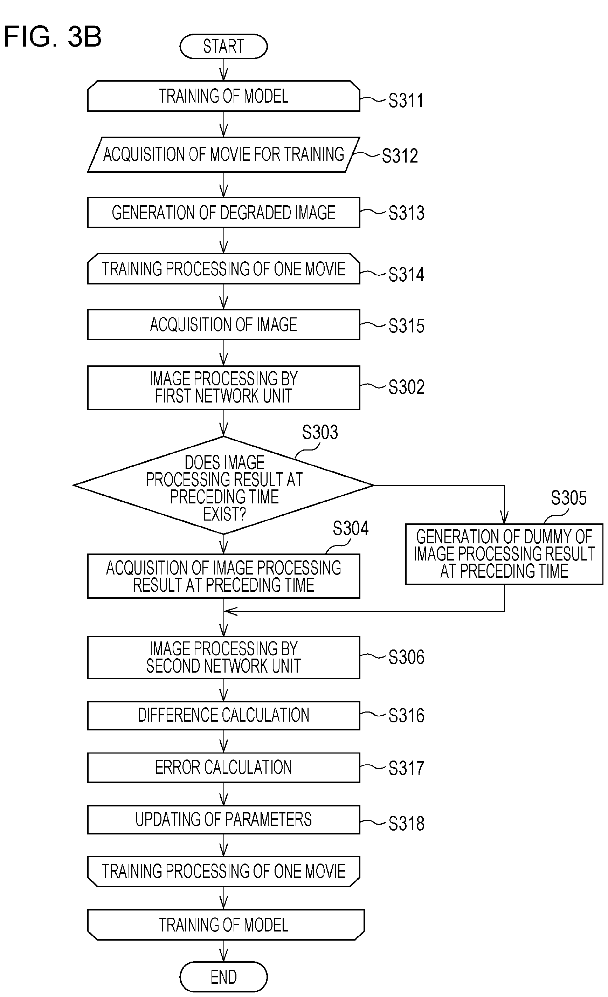

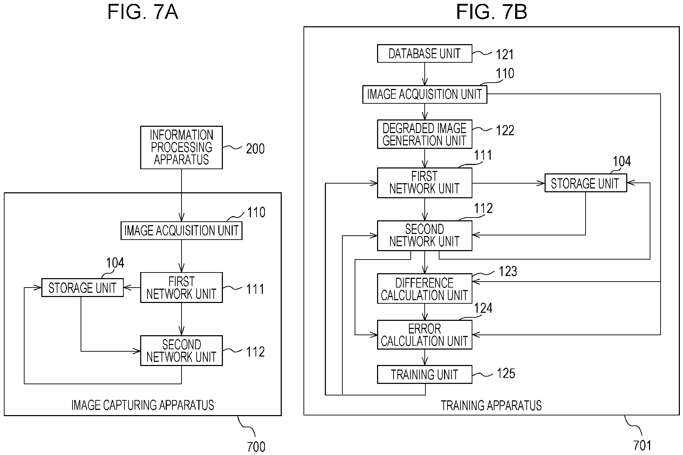

Functional configurations to be described below and later with reference to Figs. 2A, 2B, 7A, 7B, and the like and processing to be described later with reference to Figs. 3A, 3B, and the like are realized by loading programs stored in the storage unit 104 onto the memory 102 and then running the loaded programs by the CPU 101.

With reference to Figs. 2A and 2B, an example of the functional configuration of the information processing apparatus 100 and the training apparatus 120 according to the present embodiment will now be described.

The information processing apparatus 100 receives, as an input, image data of an image such as a moving image, performs various kinds of image processing on the image, and then outputs image data of the processed image. The image processing performed by the information processing apparatus 100 on an input image could include image processing that enhances the quality of the image, for example, denoising, deblurring, super-resolution, and the like. As another example, the image processing performed by the information processing apparatus 100 on an input image may include image processing that converts the drawing style of the image into another drawing style, or the like. As described here, the image processing performed by the information processing apparatus 100 on an input image is not limited to any specific type of image processing as long as it applies some kind of manipulation to the input image. In the present embodiment, for the sake of convenience, various descriptions will be given while focusing on a case where quality-enhancing image processing whose examples have been described above is applied to an input image.

The information processing apparatus 100 includes an image acquisition unit 110, a first network unit 111, and a second network unit 112. The information processing apparatus 100 is connected to an image capturing apparatus 200 via a predetermined transmission path (for example, a cable, a network, or the like) such that data transmission and reception can be performed interactively therebetween.

The image capturing apparatus 200 is an imaging device that includes an imaging optical system and an image pickup element, and outputs image data of an image (for example, a moving image, a still image, or the like) corresponding to the result of capturing a subject to the image acquisition unit 110 of the information processing apparatus 100. In the present embodiment, for the sake of convenience, it is assumed that the image capturing apparatus 200 sequentially outputs moving-picture image data corresponding to the result of capturing the subject to the image acquisition unit 110.

The image acquisition unit 110 corresponds to an input interface configured to input, into the information processing apparatus 100 as an input image, image data of an image that is to be subjected to image processing by the information processing apparatus 100. In the present embodiment, the image acquisition unit 110 is assumed to acquire the moving-picture image data corresponding to the result of capturing performed by the image capturing apparatus 200.

The first network unit 111 includes a neural network configured to, upon receiving an input of image data, apply, to an image that the image data represents, predetermined image processing pertaining to manipulation of the image, thereby generating image data that represents the processed image. Specifically, the first network unit 111 causes the neural network to generate the image data of the processed image by inputting the image data acquired by the image acquisition unit 110 into the neural network.

The second network unit 112 includes a neural network configured to apply, to input image data, image processing that is similar to the image processing applied by the neural network of the first network unit 111. The second network unit 112 with such a configuration has a recursive architecture that receives an output from the first network unit 111 and an output from its own neural network as an input into its own neural network. As described above, the second network unit 112, by inputting image data outputted from the first network unit 111 into its own neural network, causes its own neural network to generate the image data of the processed image.

In the present embodiment, the image data of the processed image outputted from the first network unit 111 corresponds to an example of "first image data", and the image data of the processed image outputted from the second network unit 112 corresponds to an example of "second image data".

The training apparatus 120 trains the neural network of each of the first network unit 111 and the second network unit 112. A detailed description of an example of the configuration of the training apparatus 120 will be given later.

Next, with reference to Fig. 3A in conjunction with Fig. 2, an example of processing performed by the information processing apparatus 100 according to the present embodiment will now be described while focusing on a case where predetermined image processing pertaining to manipulation of an image is performed on the image, the target of processing, by using neural networks. Described in the present embodiment is an example of a case where denoising processing, which generates an image with a reduction in noise influence (ideally, a noiseless image) by removing noise from a noise-containing image (hereinafter will be referred to also as "noisy image"), is applied as the above image processing.

The image processing that the information processing apparatus 100 performs on the target image is not limited to denoising. Any other kind of quality-enhancing image processing such as super-resolution or deblurring may be applied. Instead of the quality-enhancing image processing, any other processing may be applied as long as it is image processing pertaining to manipulation of an image.

In S301, the image acquisition unit 110 acquires, as input image data, image data of a noisy image, which is an image with noise manifested therein, from the image capturing apparatus 200, and inputs the image data of the noisy image into the first network unit 111. The image acquisition unit 110 acquires, one after another, pieces of image data of images acquired sequentially in a time series by the image capturing apparatus 200, and inputs the images represented by the image data into the first network unit 111. In the present embodiment, it is assumed for the sake of description that the image captured by the image capturing apparatus 200 contains noise. An example of this noise is noise originating at the image pickup element and manifested due to amplification when sensor sensitivity is increased.

In S302, the first network unit 111 generates a quality-enhanced image by performing image processing on the noisy image that is inputted thereto. The quality-enhanced image mentioned here corresponds to an image with a reduction in noise influence (hereinafter will be referred to also as "denoised image") by removing noise from the noisy image.

As an example of a neural network that realizes quality-enhancing image processing, a convolutional neural network (CNN) for denoising has been proposed in "Toward Convolutional Blind Denoising of Real Photographs, Shi Guo et al., 2019". A CNN is comprised of many convolution layers and activation functions. In particular, a network called "U-Net" having a U-shaped architecture is used as a neural network that realizes quality-enhancing image processing such as denoising, super-resolution, and the like. Also in the network disclosed in "Toward Convolutional Blind Denoising of Real Photographs, Shi Guo et al., 2019", denoising is performed using U-Net. Similarly, in the present embodiment, it is assumed that an architecture based on U-Net is used, as in the neural network disclosed in "Toward Convolutional Blind Denoising of Real Photographs, Shi Guo et al., 2019".

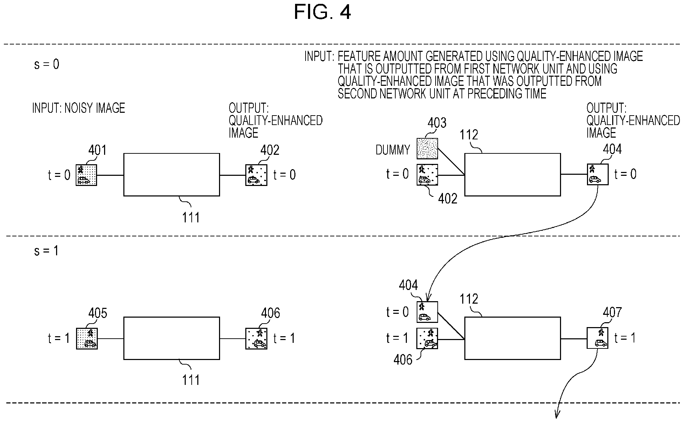

With reference to Fig. 4, an example of a neural network configuration used in the present embodiment will now be described. A series of neural networks illustrated in Fig. 4 includes two neural networks applied respectively to the first network unit 111 configured to perform denoising processing on an input image and the second network unit 112 configured to perform denoising processing on an input image. Images that are successive in a time series (for example, a series of frame images constituting a movie) are sequentially inputted into the series of neural networks illustrated in Fig. 4. Predetermined image processing (for example, image processing pertaining to denoising) is performed on each image inputted thereto. Let "s" be a time at which image processing is performed. Based on this definition, an example of a case where image processing is sequentially performed at each time s = 0, 1, ... in a time series will be described here. In the description below, "t", a variable that represents a time, will be used separately from the variable s.

Image processing at s = 0 corresponds to initial image processing in a series of image processing performed moment by moment in the progression of time. First, in the image processing at s = 0, a noisy image 401 of t = 0 is acquired. Image data of the acquired noisy image 401 is inputted into the first network unit 111. Upon receiving this input, the first network unit 111 performs image processing for removing noise manifested in the image on the noisy image 401. Then, the first network unit 111 outputs a denoised image, which is generated as the result of this image processing, as image data of a quality-enhanced image 402 of t = 0.

Next, the second network unit 112 merges, along the channel axis, the quality-enhanced image 402 (denoised image) represented by the image data outputted from the first network unit 111 with a quality-enhanced image represented by image data that is its own output at the preceding time. Then, the second network unit 112 takes the image after the merging as an input and performs image processing thereon. Note that, however, in the image processing at s = 0, there exists no quality-enhanced image corresponding to the output from the second network unit 112 at the preceding time. Therefore, in such a case, the second network unit 112 generates a dummy input (a dummy quality-enhanced image 403), merges this dummy with the quality-enhanced image 402 outputted from the first network unit 111, and takes the image after the merging as an input into itself. The second network unit 112 generates a denoised image by performing image processing on the above-mentioned input (the image after the merging), and outputs image data of a quality-enhanced image, where the denoised image generated here is a quality-enhanced image of t = 0.

Next, in the image processing at s = 1, image data of a noisy image 405 of t = 1 is acquired. The first network unit 111 generates a quality-enhanced image 406 (denoised image) by removing noise from an image represented by the input image data, and outputs image data of the quality-enhanced image 406. The second network unit 112 merges, along the channel axis, the quality-enhanced image 406 represented by the image data outputted from the first network unit 111 with a quality-enhanced image 404 represented by image data that is its own output at the preceding time, and takes the image after the merging as an input into itself. The term "channel" as used herein means a color channel, typically, R, G, B, etc. The quality-enhanced image 404 that was outputted from the second network unit 112 through image processing at the preceding time is equivalent to the denoised image that was outputted as the quality-enhanced image of t = 0 from the second network unit 112 as the result of the image processing at s = 0. The second network unit 112 generates a denoised image by performing image processing on the above-mentioned input, and outputs image data of a quality-enhanced image, where the denoised image generated here is a quality-enhanced image of t = 1.

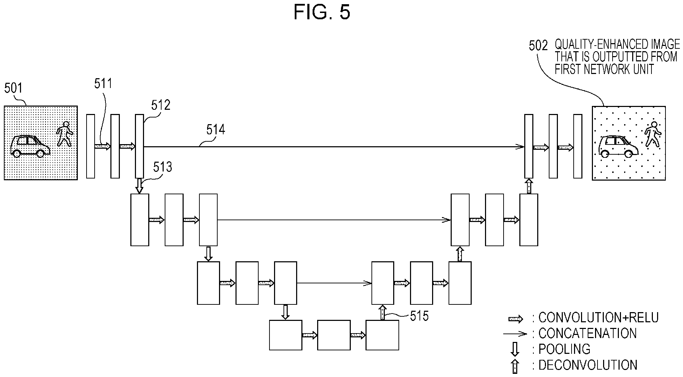

With reference to Fig. 5, an example of the configuration of the first network unit 111 will now be described in more detail while focusing on the configuration of a neural network applied to the first network unit 111. The first network unit 111 uses, as a neural network configured to perform image processing on an input image, U-Net made up of an encoder configured to generate a feature amount while performing image compression and a decoder configured to restore an image from the compressed feature amount.

In the neural network, first, at the encoder, a feature amount with different resolutions and different number of channels (a feature amount extracted from an image) is generated from an input image 501. The neural network generates a feature amount 512 by performing processing 511 of applying convolution operation and ReLU function operation to the input image 501 more than once. The neural network obtains a feature amount with a decrease in resolution achieved by performing pooling processing 513 on the generated feature amount 512 and with an increase in the number of channels achieved by repeating convolution operation and ReLU function operation again. The feature amount 512 generated here is used at the time of image restoration processing to be described later and undergoes skip concatenation 514 with another feature amount generated while being up-sampled.

Repeating a series of processes restores the compressed feature amount to an image while decreasing the number of channels and increasing resolution through deconvolution operation 515. The feature amount up-sampled through this deconvolution is skip-concatenated with the feature amount generated by the encoder, and applying of convolution operation, ReLU function operation, and deconvolution processing is repeated more than once. Finally, image data of a quality-enhanced image 502 having a desired resolution and a desired number of channels is outputted. The quality-enhanced image 502 outputted from the first network unit 111 corresponds to an image obtained by removing noise from the input image 501.

Though it is assumed in the present embodiment that a neural network configured as described above is used, the architecture of a neural network that is applied is not specifically limited as long as the applied neural network is capable of performing, on an input image, image processing pertaining to manipulation of the image such as quality enhancement.

Referring back to Fig. 3, in S303, the second network unit 112 determines whether or not there exists image data of a quality-enhanced image that is its own output at the preceding time.

In a case where the second network unit 112 determines in S303 that there exists image data of a quality-enhanced image that is its own output at the preceding time, the process proceeds to S304. In this case, in S304, the second network unit 112 acquires the image data of the quality-enhanced image that is its own output at the preceding time.

On the other hand, in a case where the second network unit 112 determines in S303 that there does not exist image data of a quality-enhanced image that is its own output at the preceding time, the process proceeds to S305. In this case, in S305, the second network unit 112 generates image data of a dummy quality-enhanced image.

The second network unit 112 uses, as an input for its own image processing performed at the current time, the image data of the quality-enhanced image that was outputted from itself through image processing that was performed at the preceding time.

The information processing apparatus according to the present embodiment, while sequentially acquiring pieces of image data of noisy images inputted thereto, performs image processing on the noisy images moment by moment in the progression of time. However, among the series of image processing performed moment by moment in the progression of time, in the image processing at the start time, there exists no image data of a quality-enhanced image that was outputted from the second network unit 112 as the result of image processing corresponding to the preceding time. Therefore, the second network unit 112 generates image data of a dummy quality-enhanced image, and uses this image data of a dummy quality-enhanced image as an input in place of the image data of the quality-enhanced image that was outputted as the result of image processing corresponding to the preceding time.

With reference to Fig. 4, processing performed by the second network unit 112 will now be described. In the image processing at s = 0, the second network unit 112 attempts to acquire, as an input into itself, image data of a quality-enhanced image (denoised image) of t = -1 that was outputted as the result of its own image processing at s = -1. However, there exists no image data of a quality-enhanced image (denoised image) of t = -1 corresponding to the result of image processing at s = -1. Therefore, the second network unit 112 generates image data of a dummy quality-enhanced image 403 taken as an input in place of the quality-enhanced image of t = -1.

As the dummy quality-enhanced image generated here, for example, an image that has the same width, the same height, and the same number of channels as those of the quality-enhanced image outputted from the second network unit 112 and has a value of zero at each pixel can be used. The value of each pixel of the dummy quality-enhanced image is not necessarily limited to zero as long as this dummy has the same width, the same height, and the same number of channels as those of the quality-enhanced image used as the input. For example, value determined at the time of training may be used.

Referring back to Fig. 3, in S306, the second network unit 112 merges, along the channel axis, the quality-enhanced image represented by the image data that was outputted from itself through image processing that was performed at the preceding time and the quality-enhanced image represented by the image data outputted from the first network unit 111 at the current time. The second network unit 112 generates a quality-enhanced image (for example, a denoised image) by taking the above-mentioned image after the merging as an input and performing image processing thereon, and outputs image data of this quality-enhanced image. The quality-enhanced image (denoised image) outputted at this time is used as an input into the second network unit 112 in image processing that is to be performed at the succeeding time.

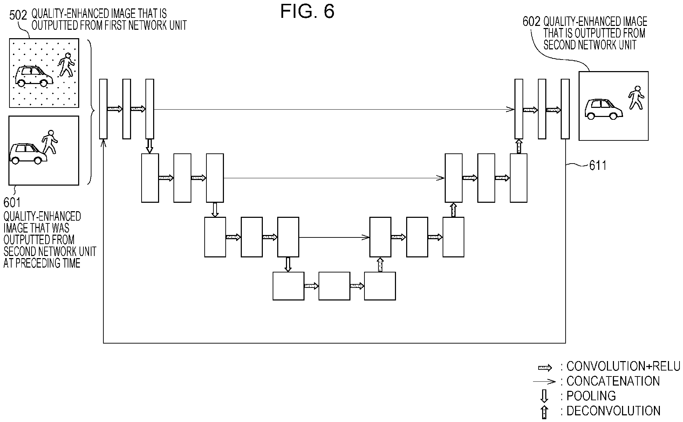

With reference to Fig. 6, an example of the configuration of the second network unit 112 will now be described in more detail while focusing on the configuration of a neural network applied to the second network unit 112. The second network unit 112 uses U-Net as a neural network configured to perform image processing on an input image, similarly to the first network unit 111. However, since the second network unit 112 is configured to use a quality-enhanced image that is its own output at the preceding time as an input, concatenating processing 611 for recursively inputting its own output is performed. Prior to the concatenating processing 611, "convolution + ReLU function" may be applied to a quality-enhanced image 602 more than once, a feature amount may be generated from a quality-enhanced image that is to be inputted for image processing at the succeeding time, and this feature amount may be used as an input. The quality-enhanced image 502 that is outputted from the first network unit 111 in image processing at the current time and a quality-enhanced image 601 that was outputted from the second network unit 112 in image processing at the preceding time are merged along the channel axis. The image generated through the merging is used as an input into the second network unit 112 at the current time.

The second network unit 112 generates the quality-enhanced image 602 by performing processing for feature amount compression and processing for image restoration on the input in the same manner as done by the first network unit 111, and outputs image data of the quality-enhanced image 602. The quality-enhanced image 602 represented by the image data corresponding to the output from the second network unit 112 features higher image quality through a further enhancement than that of the quality-enhanced image 502 represented by the image data corresponding to the output from the first network unit 111.

Though a case of using neural networks configured as described above has been described in the present embodiment, the foregoing disclosure shall not be construed to necessarily limit the architecture of neural networks used in the first network unit 111 and the second network unit 112. That is, the architecture of the neural network is not limited as long as it is possible to use image data of an image that was outputted as the result of image processing corresponding to the preceding time as an input into the second network unit 112 and to perform, on an input image, image processing pertaining to manipulation of the image such as quality enhancement.

As described above, an information processing apparatus according to the present disclosure performs image processing moment by moment in the progression of time on a time-series chain of images acquired sequentially, thereby obtaining each processed image (for example, each quality-enhanced image).

Next, with reference to Fig. 2B, an example of the functional configuration of a training apparatus according to the present embodiment will now be described. The training apparatus 120 performs the training of a neural network applied to each of a first network unit configured to perform image processing such as quality enhancement described above and a second network unit configured to perform image processing similar thereto. The training apparatus 120 includes a database unit 121, an image acquisition unit 110, a degraded image generation unit 122, a first network unit 111, a second network unit 112, a difference calculation unit 123, an error calculation unit 124, and a training unit 125.

The database unit 121 pre-stores a large amount of moving-picture image data that is data after restoration from a change such as noise manifested in an image by image processing that is discussed herein. As a specific example, in a case where denoising processing is applied as the image processing that is discussed herein, clean moving-picture image data that is free from noise is stored in the database unit 121. A stream of moving-picture image data stored in the database unit 121 corresponds to training data (supervisory data) that is to be used for training a neural network applied to each of the first network unit and the second network unit.

From among streams of moving-picture image data stored in the database unit 121, the image acquisition unit 110 extracts moving-picture image data that is to be used for training. Then, the image acquisition unit 110 sequentially acquires image data of a series of frame images (i.e., a series of still images that are successive in a time series) constituting a movie represented by the extracted image data as image data of true-value images, in a time series.

Based on the image data of each true-value image acquired by the image acquisition unit 110, the degraded image generation unit 122 generates a degraded image, the quality of which has been degraded from the true-value image. For example, in a case where denoising processing is applied as the image processing that is discussed herein, the degraded image generation unit 122 generates, as the degraded image, a noisy image by adding noise to the true-value image. Image data of a degraded image corresponds to an example of "manipulated image data".

Based on two true-value images that are extracted from the movie used for an input and are successive in a time series, the difference calculation unit 123 generates a subtraction image between these two successive true-value images. As a specific example, the difference calculation unit 123 may, based on true-value images corresponding to the current time and the preceding time respectively, generate a subtraction image between these true-value images. In addition, the difference calculation unit 123 generates a subtraction image between two quality-enhanced images that are successive in a time series and are generated by performing image processing by the second network unit 112 on two degraded images generated respectively from the two true-value images that are successive in a time series. As a specific example, the difference calculation unit 123 may, based on quality-enhanced images corresponding to the current time and the preceding time respectively, generate a subtraction image between these quality-enhanced images. The subtraction image between the two true-value images described above corresponds to an example of "first difference". The subtraction image between the two quality-enhanced images described above (in other words, the difference between two processed images) corresponds to an example of "second difference".

Taking the subtraction image between the two true-value images that are successive in a time series as a true value, the error calculation unit 124 calculates an error value by using the subtraction image between the two quality-enhanced images corresponding to the two true-value images that are successive in a time series.

The training unit 125 performs the training of a neural network for each of the first network unit 111 and the second network unit 112 by using the error value generated by the error calculation unit 124. Specifically, based on the error value generated by the error calculation unit 124, the training unit 125 updates neural network parameters applied to each of the first network unit 111 and the second network unit 112.

Next, with reference to Fig. 3B in conjunction with Fig. 2, an example of processing performed by the training apparatus 120 according to the present embodiment will now be described while focusing on processing pertaining to neural network training applied to the information processing apparatus according to the present embodiment.

In Fig. 3B, a series of processes shown by loop limit S311 depicts processing pertaining to the training of a neural network applied to each of the first network unit 111 and the second network unit 112. Through the series of processes, parameters such as weight, bias, etc. of a neural network are updated repeatedly for each moving-picture image data corresponding to training data. Specifically, at the time of start of training, default parameter values are given to the neural network that is to be trained, and repetitive training is thereafter performed to update the parameters of the neural network.

The series of processes shown by loop limit S311 pertaining to the training of the neural network is repeated until termination conditions are met. As a specific example, it may be determined that the termination conditions are met when the number of times of training the neural network has reached a predetermined number of times, and the execution of the series of processes shown by loop limit S311 pertaining to the training of the neural network may be terminated.

Next, the content of the series of processes shown by loop limit S311 will now be described.

In S312, the degraded image generation unit 122 acquires one of streams of moving-picture image data stored in the database unit 121. As described earlier, a large amount of clean moving-picture image data that is free from noise is stored in the database unit 121. That is, image data of a time-series chain of images (a series of images that are successive in a time series, for example, a series of frame images constituting a movie) to serve as true values when the training of a neural network is performed is stored in the database unit 121.

In S313, the degraded image generation unit 122 generates degraded images corresponding to time-series images taken out of the one moving-picture image data acquired in S312. In the present embodiment, it is assumed that a noisy image obtained by adding noise to a clean image is generated as the degraded image. As a specific example, the degraded image generation unit 122 may generate the noisy image by adding noise modeled by analyzing sensor noise characteristics to the image that is to be degraded. For example, noise generated in the process of converting a photon detected by the sensor into a digital signal is conceivable as this noise. Examples of the origin from which noise arises are photon shot noise, readout noise, dark current noise, quantization error, and the like, and they are assumed to be modeled.

The degraded image generation unit 122 associates the generated degraded image with the clean image from which it has been generated, appends time information thereto to form one set, and then stores each data set made up of these images into the database unit 121.

A series of processes shown by loop limit S314 depicts a series of processes pertaining to the training of the neural network, which is executed for the one moving-picture image data acquired in S312. That is, pairs in series each made up of a clean image and a degraded image having been generated from the targeted moving-picture image data in S313 are sequentially acquired in a time series, and the series of processes shown by loop limit S314 pertaining to the training of the neural network is performed for each of these pairs. A specific description of the content of the series of processes shown by loop limit S314 will be given below.

In S315, the image acquisition unit 110 acquires two sets each made up of a clean image and a degraded image having been generated in S313 such that these two sets are successive in a time series. When this acquisition is performed, the image acquisition unit 110 acquires, as the earlier one of these two sets, one that is the same as the later one of successive sets that were acquired when image processing was performed at the preceding time. However, in a case where the set corresponding to the time for which acquisition is supposed to be performed does not exist, the image acquisition unit 110 excludes this set from the target of acquisition. Through the process described above, the image acquisition unit 110 performs set acquisition for every acquisition-possible time.

Next, the image acquisition unit 110 labels a clean image included in each acquired set as a true-value image, and outputs the true-value image and the degraded image that are included in this set to each component of the training apparatus 120. Specifically, the image acquisition unit 110 takes one degraded image out of the later one of the sets, and outputs this degraded image to the first network unit 111. Next, the image acquisition unit 110 takes two true-value images out of the two sets in order, and outputs these true-value images to the difference calculation unit 123 and the error calculation unit 124. In a case where it is only one set that can be acquired, for example, when image processing at the initial time is performed, the image acquisition unit 110 regards the image corresponding to the time for which the acquisition is impossible as not being existent.

Let's take a specific example. Consider a case where image processing is performed for time-series images of $t = 0, 1, ...$ in sequence. Let $s$ be a time at which image processing is performed. In the image processing at the start time, namely, at $s = 0$, an attempt is made to acquire a degraded image of $t = 0$ and true-value images of $t = -1, 0$ from the sets of the time $t = -1, 0$. However, at $s = 0$, the true-value image of $t = -1$ does not exist; therefore, the true-value image of $t = 0$ only is acquired. In the image processing at the next time, namely, at $s = 1$, a degraded image of $t = 1$ and true-value images of $t = 0, 1$ are acquired from the sets of the time $t = 0, 1$.

Next, through the series of processes from S302 to S306, image processing is performed on the degraded image having been inputted into the first network unit 111 in S315, and, as a result, a denoised image is obtained as a quality-enhanced image. Since the series of processes from S302 to S306 performed here is substantially the same as the series of processes from S302 to S306 illustrated in Fig. 3A, a detailed explanation thereof is not given.

The second network unit 112 outputs, to the difference calculation unit 123 and the error calculation unit 124, the quality-enhanced image outputted as the result of image processing at the current time and the quality-enhanced image at the preceding time used as the input. In addition, the second network unit 112 stores the quality-enhanced image corresponding to the current time, which is to be inputted into itself in image processing at the succeeding time.

As described earlier, in a case where the quality-enhanced image at the preceding time does not exist, the second network unit 112 uses a dummy image in place of the quality-enhanced image supposed to be inputted into itself.

In this case, the second network unit 112 uses, as the dummy image, an image that has the same width, the same height, and the same number of channels as those of the non-existent quality-enhanced image and has a value of zero at each pixel. However, the dummy image does not necessarily have to have a value of zero at each pixel as long as it has the same width, the same height, and the same number of channels as those of the quality-enhanced image used as the input. When the information processing apparatus 100 described above performs image processing, for example, if a dummy image is used for the input into the second network unit 112, a dummy quality-enhanced image having been determined at the time of training may be used as the dummy image.

In S316, the difference calculation unit 123 generates a true-value subtraction image by using the true-value image at the preceding time and the true-value image at the current time that are acquired from the image acquisition unit 110. The difference calculation unit 123 generates a quality-enhanced-image subtraction image by using the quality-enhanced image at the preceding time and the quality-enhanced image at the current time.

Processing pertaining to the generation of each subtraction image by the difference calculation unit 123 described above will now be described in detail. The difference calculation unit 123 generates a subtraction image by using two images that are successive in a time series. The true-value subtraction image $I_{diff}$ calculated using the true-value image at the preceding time $I_{t-1}$ and the true-value image at the current time It can be expressed by a relational expression shown as Equation 1 below.

$$I_{diff} = (I_t - I_{t-1}) \quad ( 1 )$$

The quality-enhanced-image subtraction image $\hat{I}_{diff}$ calculated using the quality-enhanced image at the preceding time $\hat{I}_{t-1}$ and the quality-enhanced image at the current time $\hat{I}_t$ can be expressed by a relational expression shown as Equation 2 below.

$$\hat{I}_{diff} = \left(\hat{I}_t - \hat{I}_{t-1}\right) \quad ( 2 )$$

In S317, the error calculation unit 124 calculates an error that is to be used for updating the parameters of the neural network.

Processing pertaining to the calculation of the error by the error calculation unit 124 described above will now be described in detail. The error calculation unit 124 calculates an error that is to be used for training for enabling the neural network to perform quality-enhancing image processing. Specifically, first, the error calculation unit 124 calculates an error between the quality-enhanced image at the current time and the true-value image at the current time, which is the true value corresponding to this quality-enhanced image (hereinafter will be referred to also as "image reconstruction error").

Next, the error calculation unit 124 calculates an inter-frame difference error by using the true-value subtraction image and the quality-enhanced-image subtraction image that have been generated in S316.

A final error is obtained by adding these errors together.

Based on a relational expression shown as Equation 3 below, the image reconstruction error $L_i$ is calculated as an L1 error using the quality-enhanced image at the current time $\hat{I}_t$ and the true-value image at the current time It.

$$L_i = \left| I_t - \hat{I}_t \right| \quad ( 3 )$$

Based on the quality-enhanced-image subtraction image $\hat{I}_{diff}$ and the true-value subtraction image $I_{diff}$, the inter-frame difference error Lf is calculated as an L1 error expressed by a relational expression shown as Equation 4 below.

Note that M in Equation 4 denotes a mask that is expressed by a relational expression shown as Equation 5 below and is created in accordance with the difference value of the true-value subtraction image. The mask M is created in such a manner that it contains values 0 and 1 dependent on a preset threshold th. As expressed by Equation 4 below, the inter-frame difference error Lf is calculated by finding a product of the L1 error, which is calculated based on the subtraction images described above, and the elements of the mask M. For example, in a case where the mask M is created with a setting of a small value such as th = 0.01, the error value is calculated for a portion where the change between images that are successive in a time series is small, that is, for a static region with little motion. In other words, weighting is performed by the mask M such that a heavier weight is assigned to an error of a portion where the change between true-value images is smaller.

It is also possible to control the target of error-value calculation by adjusting the values of the elements (in other words, weights) dependent on conditions in the mask M from the characteristics of the mask M described above.

As a specific example, it is possible to set a portion where the change between true-value images is relatively large (that is, a portion where there is much motion) as the target of error-value calculation by inverting 0 and 1 shown as the values dependent on the threshold th in Equation 5 below.

$$L_f = M \circ \left| I_{diff} - \hat{I}_{diff} \right| \qquad (4)$$

$$M = \begin{cases} 0 & (|I_t - I_{t-1}| > th) \\ 1 & (|I_t - I_{t-1}| \le th) \end{cases} \qquad (5)$$

Based on the image reconstruction error $L_i$ and the inter-frame difference error Lf described above, an error L to be used for updating the parameters of the neural network is finally calculated. For example, the error L can be expressed by a relational expression shown as Equation 6 below. The coefficient $\alpha$ shown in Equation 6 is a term for adjusting the value of the inter-frame difference error Lf.

$$L = L_i + \alpha L_f \qquad (6)$$

In S318, the training unit 125 updates the parameters of the neural network of each of the first network unit 111 and the second network unit 112 by means of an error back-propagation method using the error calculated in S317.

By repeating the series of processes from S311 to S318 described above, the neural network configured to perform image processing such as quality enhancement on an image represented by image data that is the target is trained.

As described above, in the training of a neural network configured to sequentially accept, as inputs, a series of images that are successive in a time series and perform image processing thereon, the present embodiment makes it easier to learn a corresponding relationship between the images that are successive in the time series, that is, to learn spatio-temporal information. This is because the processed image (for example, the quality-enhanced image) of the preceding time is inputted into the second one of two neural networks configured to execute an identical image processing task in a two-tiered neural network configuration.

The reason why the above operational effect can be obtained will now be described while focusing on a case where the target image is processed for denoising. In the present embodiment, first, through image processing performed by the first-tier neural network, a denoised image obtained by removing noise to some extent from an input image is outputted. The denoised image obtained by removing noise to some extent at the first-tier neural network, and a denoised image that is the output of the second-tier neural network at the preceding time, are inputted into the second-tier neural network. Since this configuration is adopted, the second-tier neural network is trained based on, as an input, images that are successive in a time series and contain less noise; therefore, it is easier to learn a corresponding relationship between the two images.

In addition, in the present embodiment, the neural network configured to perform image processing such as quality enhancement on an input image is trained using an inter-frame difference error. With this configuration, even in a situation where image processing is applied to a series of images that are successive in a time series as in a moving picture, it is possible to expect an effect of suppressing manifestation of a phenomenon that artifacts arising in the images look fluctuating.

Second Embodiment

A second embodiment of the present disclosure will now be described. The first embodiment described above is an example of a two-tiered recurrent neural network configuration to input the processed image (for example, the quality-enhanced image) of the preceding time into the second one of two neural networks configured to perform similar image processing on an input image. In the present embodiment, an example of a neural network configured to perform image processing such as quality enhancement on a plurality of images as an input and configured to output a plurality of images will be described.

With reference to Fig. 7A, an example of the functional configuration of an information processing apparatus 700 according to the present embodiment will now be described. The information processing apparatus 700 according to the present embodiment is different from the information processing apparatus 100 illustrated in Fig. 2 in that it includes a storage unit 104.

The storage unit 104 is a storage area for storing image data of processed images (for example, quality-enhanced images) that are generated through image processing performed moment by moment in the progression of time by the information processing apparatus 700 according to the present embodiment. Since the other components are substantially the same as those of the information processing apparatus 100 illustrated in Fig. 2, a detailed explanation thereof is not given.

For the sake of convenience, similarly to the first embodiment described above, various descriptions will be given while focusing on a case where the image processing performed by the information processing apparatus 700 is denoising processing for removing noise manifested in the target image.

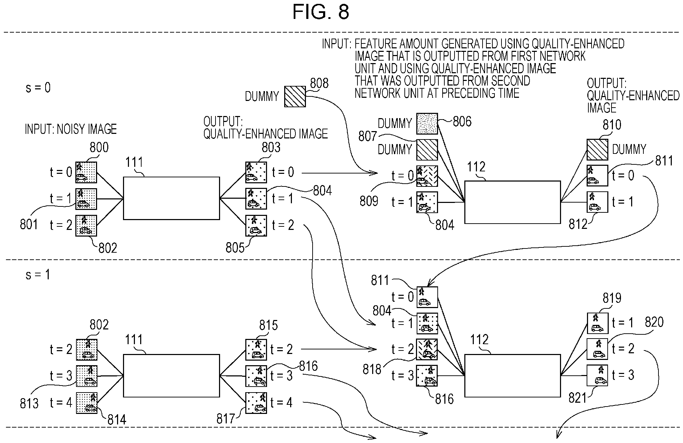

Fig. 8 illustrates an example of a neural network configuration used in the present embodiment. Fig. 8 illustrates inputs and outputs of a series of neural networks at each processing time s of image processing performed moment by moment in the progression of time by the information processing apparatus 700 according to the present embodiment. In the present embodiment, for the sake of convenience, the start time of image processing performed by the information processing apparatus 700 is defined as s = 0, and the time at which the next image processing is performed is defined as s = 1.

With reference to Figs. 3A, 7A, and 8, an example of processing performed by the information processing apparatus 700 according to the present embodiment will now be described while focusing on a case where predetermined image processing pertaining to manipulation of an image is performed on the image, the target of processing, by using neural networks.

In S301, the image acquisition unit 110 acquires, as input image data, image data of a noisy image, which is an image with noise manifested therein, from the image capturing apparatus 200, and inputs the image data of the noisy image into the first network unit 111. At this time, the image acquisition unit 110 acquires respective pieces of image data of three images that are successive in a time series as input images, and inputs the three images represented by the series of image data into the first network unit 111.

The information processing apparatus 700 according to the present embodiment is designed such that the same image as the image of the latest time in image processing that was performed at the preceding time is used as the image of the earliest time in the three images that are successive in a time series and are acquired by the image acquisition unit 110. Specifically, in the image processing at s = 0, three noisy images represented by a series of image data acquired by the image acquisition unit 110 are an image 800 of a time t = 0, an image 801 of a time t = 1, and an image 802 of a time t = 2. In the image processing at s = 1, three noisy images represented by a series of image data acquired by the image acquisition unit 110 are the image 802 of the time t = 2, an image 813 of a time t = 3, and an image 814 of a time t = 4. As described here, in the example illustrated in Fig. 8, the image acquisition unit 110 acquires respective pieces of image data of three noisy images used as an input for each image processing such that the input into the neural network includes the image 802 of the time t = 2 (noisy image) in the image processing at s = 0, 1.

In S302, the first network unit 111 receives the noisy images as an input, performs image processing thereon, and outputs image data of denoised images corresponding to the result of the image processing to the second network unit 112. In addition, at this time, the first network unit 111 outputs image data of denoised images corresponding to the result of the image processing to the storage unit 104, too. By this means, the image data of the denoised images outputted from the first network unit 111 are stored into the storage unit 104.

A neural network having the same architecture as that of the example illustrated in Fig. 5 is used as the neural network applied to the first network unit 111 according to the present embodiment. However, in the present embodiment, three noisy images that are successive in a time series are used as an input into the neural network, and image data of three denoised images (quality-enhanced images) corresponding to the input images are outputted from this neural network.

Specifically, in the image processing at s = 0, the image 800 of the time t = 0, the image 801 of the time t = 1, and the image 802 of the time t = 2 are used as the noisy images that are inputted. At this time, the first network unit 111 outputs a denoised image 803 of the time t = 0, a denoised image 804 of the time t = 1, and a denoised image 805 of the time t = 2 as quality-enhanced images corresponding respectively to the input images.

The image processing at s = 1 is similar to the above; however, denoised images 805 and 815 different from each other are obtained as denoised images outputted from the first network unit 111 in response to the input of the noisy image of t =2, which is duplicative in the image processing at s = 0, 1.

In addition, in the image processing at s = 1, image data of each of the denoised image 804 of the time t = 1 and the denoised image 805 of the time t = 2 that were outputted from the first network unit 111 in the preceding time s = 0 is stored into the storage unit 104 so as to be used as an input into the second network unit 112.

In S303, the second network unit 112 determines whether or not there exists image data of a denoised image (quality-enhanced image) that is its own output at the preceding time.

In a case where the second network unit 112 determines in S303 that there exists image data of a denoised image that is its own output at the preceding time, the process proceeds to S304. In this case, in S304, the second network unit 112 acquires the image data of the denoised image that is its own output at the preceding time.

On the other hand, in a case where the second network unit 112 determines in S303 that there does not exist image data of a denoised image (quality-enhanced image) that is its own output at the preceding time, the process proceeds to S305. In this case, in S305, the second network unit 112 generates image data of a dummy quality-enhanced image.

The second network unit 112 determines whether or not there exist image data corresponding to the output of the first network unit 111 at the preceding time and image data corresponding to the output of the second network unit 112 at the preceding time as the quality-enhanced images (denoised images) corresponding to the preceding time. These pieces of image data of the quality-enhanced images corresponding to the preceding time are stored in the storage unit 104, if they exist.

Specifically, in the image processing at s = 0, the second network unit 112 attempts to acquire, as an input into itself, image data of a denoised image (quality-enhanced image) of t = -1 and image data of a denoised image (quality-enhanced image) of t = 0 that were outputted from the first network unit 111 at s = -1. In addition, the second network unit 112 attempts to acquire image data of a denoised image (quality-enhanced image) of t = -2 that is its own output at s = -1. However, there exists no image data of denoised images corresponding to the result of image processing at s = -1. Therefore, the second network unit 112 generates dummy image data of quality-enhanced images corresponding to the output of the first network unit 111 and its own output as image data of dummy quality-enhanced images that are to be inputted in place of the image data of the quality-enhanced images corresponding to the result of image processing at s = -1.

In the image processing at s = 1, the second network unit 112 attempts to acquire image data of a quality-enhanced image (denoised image 804) of t = 1 and image data of a quality-enhanced image (denoised image 805) of t = 2 that were outputted from the first network unit 111 through the image processing at s = 0. In addition, the second network unit 112 attempts to acquire image data of a quality-enhanced image (denoised image 811) of t = 0 that is its own output in the image processing at s = 0.

In S304, the second network unit 112 acquires, from the storage unit 104, image data of the denoised image (quality-enhanced image) corresponding to the preceding time, which is to be inputted into itself.

Specifically, in the image processing at s = 1, the second network unit 112 acquires, as an input into itself, image data of a denoised image (quality-enhanced image) of t = 1 and image data of a quality-enhanced image of t = 2 that were outputted from the first network unit 111 in the image processing at s = 0.

In addition, the second network unit 112 acquires image data of a denoised image of t = 0 that was outputted from itself in the image processing at s = 0.

In S305, the second network unit 112 generates image data of a dummy quality-enhanced image that is to be inputted into itself.

Specifically, in a case where there exists no image data of the quality-enhanced image (denoised image) at the preceding time that is to be inputted into itself, the second network unit 112 generates a dummy input. The dummy quality-enhanced image generated at this time has the same width, the same height, and the same number of channels as those of each of the quality-enhanced image outputted from the first network unit 111 and the quality-enhanced image outputted from the second network unit 112 and has a value of zero at each pixel. However, the dummy quality-enhanced image does not necessarily have to have a value of zero at each pixel as long as it has the same width, the same height, and the same number of channels as those of the quality-enhanced image used as the input.

In S306, the second network unit 112 generates a feature amount that represents image features by using the quality-enhanced image at the preceding time, or the dummy quality-enhanced image, and the quality-enhanced images outputted from the first network unit 111. The feature amount generated at this time will be described in detail later in conjunction with the architecture of the neural network applied to the second network unit 112. The second network unit 112 receives the feature amount described above as an input, performs image processing on the input to generate denoised images (quality-enhanced images) of the time corresponding to the inputted feature amount, and outputs image data of the denoised images. The image data of the denoised images outputted at this time are stored into the storage unit 104 to be used as an input into the second network unit 112 in image processing performed moment by moment in the progression of time by the information processing apparatus 700.

Next, an example of the architecture of the neural network applied to the second network unit 112 will now be described. A configuration similar to the configuration illustrated in Fig. 6 is used for the neural network applied to the second network unit 112.

The second network unit 112 takes, as an input, a feature amount generated using four quality-enhanced images that are successive in a time series. Specifically, the second network unit 112 acquires two images that are an image of the earliest time and an image of the second earliest time from among the three quality-enhanced images that are outputted as a series of image data from the first network unit 111 when image processing at a certain time is performed. In addition, the second network unit 112 acquires two images that are an image of the latest time and an image of the second latest time from among the three quality-enhanced images that were outputted as a series of image data from the first network unit 111 in the image processing at the preceding time, which is immediately before the current time. Furthermore, the second network unit 112 acquires an image of the middle time from among the three quality-enhanced images that were outputted as a series of image data from itself in the image processing at the preceding time. Then, in a case where there exists any images of the same time among the quality-enhanced images at the current time and the quality-enhanced images at the preceding time, the second network unit 112 synthesizes these quality-enhanced images of the same time together. However, in a case where there exists no quality-enhanced image at the preceding time, the second network unit 112 uses a dummy quality-enhanced image at the preceding time.

Then, the second network unit 112 performs merging, along the channel axis, of the result of synthesizing the plurality of quality-enhanced images to obtain a feature amount that is an input into itself, and generates quality-enhanced images, its own output, by performing image processing on the feature amount. At this time, the second network unit 112 generates, as the output corresponding to the result of the image processing, image data of denoised images of the three timings with higher image quality by applying further quality enhancement to the quality-enhanced images of the three timings outputted from the first network unit 111 and used as the input. The image data of the series of denoised images outputted from the second network unit 112 at this time are stored into the storage unit 104 because they are used as an input in image processing to be performed at the succeeding time.

It can be said that the feature amount according to the present embodiment described above corresponds to a synthesized image obtained by synthesizing a plurality of images (a plurality of images that could partially include a dummy image, too). Therefore, when the term "image data" is used in the present disclosure, unless otherwise specified, its meaning shall be construed to encompass both data that represents an image itself and data that represents a feature amount generated on the basis of a plurality of images as described above (in other words, a synthesized image obtained by synthesizing a plurality of images).

With reference to Fig. 8, a detailed explanation of an example of processing performed by the second network unit 112 will be given below while taking a specific example. In the image processing at s = 0, the second network unit 112 attempts to acquire image data of a denoised image (quality-enhanced image) of t = -1, image data of denoised images of t = 0, and image data of a denoised image of t = 1 that are/were outputted from the first network unit 111.

Specifically, first, the second network unit 112 acquires image data of each of a quality-enhanced image (denoised image 803) of t = 0 and a quality-enhanced image (denoised image 804) of t = 1 that are outputted from the first network unit 111 in the image processing at s = 0. Next, the second network unit 112 attempts to acquire image data of each of a quality-enhanced image of t = -1 and a quality-enhanced image of t = 0 that were outputted from the first network unit 111 in the image processing at the preceding time, namely, s = -1. However, since the image processing at s = -1 was not performed actually, there exists no image data of the quality-enhanced images corresponding thereto. Therefore, the second network unit 112 acquires image data of a dummy 807 and image data of a dummy 808 in place of the image data of these non-existent quality-enhanced images. In addition, the second network unit 112 attempts to acquire image data of a quality-enhanced image of t = -2 that was outputted from itself in the image processing at s = -1; however, similarly, since this image processing was not performed actually, there exists no image data of the quality-enhanced image corresponding thereto. Therefore, the second network unit 112 acquires image data of a dummy 806 in place of the image data of the non-existent quality-enhanced image.

The second network unit 112 synthesizes the quality-enhanced images corresponding to the same time together, among the images acquired as described above as its own input. Specifically, the second network unit 112 synthesizes the dummy 808 of t = 0 corresponding to the image processing at s = -1 with the denoised image 803 (quality-enhanced image) of t = 0 that is outputted from the first network unit in the image processing at s = 0. The synthesis of the dummy 808 with the denoised image 803 can be performed by, for example, adding up pixel values of each image on a channel-by-channel basis and then generating an image whose pixel value is an average of channel-by-channel values. As the image synthesis method described above, for example, a synthesis method having been determined at the time of neural network training can be used. The image synthesis method described above is just an example. Any method may be used as long as it is possible to keep the same width, the same height, and the same number of channels as those of the quality-enhanced image that is the source of the synthesis in the result of the synthesis.

The second network unit 112 generates a feature amount by merging the dummy 806 of t = -2, the dummy 807 of t = -1, the synthesis result 809 of t = 0, and the denoised image 804 of t = 1 along the channel axis, and takes the feature amount as an input into itself. The image outputted from the second network unit 112 correspondingly to the time corresponding to output image of the first network unit used as the input into the second network unit 112 is deemed as the output image of the second network unit 112 at this time.

Specifically, the second network unit 112 performs image processing on the above-described feature amount inputted into itself, and outputs image data of each of a denoised image 810 (quality-enhanced image) of t = -1, a denoised image 811 of t = 0, and a denoised image 812 of t = 1. However, with regard to the denoised image 810 (quality-enhanced image) of t = -1, the output result is a dummy image because the input image corresponding thereto is a dummy image.

In the image processing at s = 1, the second network unit 112 acquires image data of a denoised image (quality-enhanced image) of t = 1, image data of denoised images of t = 2, and image data of a denoised image of t = 3 that are/were outputted from the first network unit 111.

Specifically, first, the second network unit 112 acquires image data of each of a denoised image 815 (quality-enhanced image) of t = 2 and a denoised image 816 of t = 3 that are outputted from the first network unit 111 in the image processing at s = 1. Next, the second network unit 112 acquires image data of each of a denoised image 804 (quality-enhanced image) of t = 1 and a denoised image 805 (quality-enhanced image) of t = 2 that were outputted from the first network unit 111 in the image processing at the preceding time, namely, s = 0.

In addition, the second network unit 112 acquires image data of the denoised image 811 (quality-enhanced image) of t = 0 that was outputted from itself in the image processing at s = 0. Then, the second network unit 112 synthesizes images of the same time together among the series of input images represented respectively by the acquired series of image data. Specifically, the second network unit 112 synthesizes the denoised image 805 (quality-enhanced image) of t = 2 corresponding to the image processing at s = 0 with the denoised image 815 (quality-enhanced image) of t = 2 that is outputted from the first network unit 111 in the image processing at s = 1. Next, the second network unit 112 generates a feature amount by merging the denoised image 811 of t = 0, the denoised image 804 of t = 1, the synthesis result 818 of t = 2, and the denoised image 816 of t = 3 acquired as described above along the channel axis, and takes the feature amount as an input into itself.

Then, the second network unit 112 performs image processing on the above-described feature amount inputted into itself, and outputs image data of each of a denoised image 819 (quality-enhanced image) of t = 1, a denoised image 820 of t = 2, and a denoised image 821 of t = 3.

As described above, an information processing apparatus according to the present embodiment performs image processing sequentially on images acquired moment by moment in the progression of time (for example, frame images that constitute a movie), thereby obtaining each processed image (for example, each quality-enhanced image such as each denoised image).

Next, a training apparatus configured to perform the training of a neural network applied to each of the first network unit 111 and the second network unit 112 in the present embodiment will now be described.

With reference to Fig. 7B, an example of the functional configuration of a training apparatus 701 according to the present embodiment will now be described. The training apparatus 701 is different from the training apparatus 120 illustrated in Fig. 2B in that it includes the storage unit 104.

The storage unit 104 is a storage area for storing image data of processed images (for example, quality-enhanced images) that are generated through image processing performed moment by moment in the progression of time by the training apparatus 701 according to the present embodiment. Since the other components are substantially the same as those of the training apparatus 120 illustrated in Fig. 2B, a detailed explanation thereof is not given.

Next, with reference to Figs. 3 and 7B, an example of processing performed by the training apparatus 701 according to the present embodiment will now be described while focusing on processing pertaining to neural network training applied to the information processing apparatus 700 according to the present embodiment. In the present embodiment, a detailed explanation of processing that is substantially the same as processing in the first embodiment described earlier will be omitted.

In Fig. 3B, a series of processes shown by loop limit S311 depicts processing pertaining to the training of a neural network applied to each of the first network unit 111 and the second network unit 112, similarly to the first embodiment described earlier. Through the series of processes, parameters such as weight, bias, etc. of a neural network are updated repeatedly for each moving-picture image data corresponding to training data.

In S312, the degraded image generation unit 122 acquires one of streams of moving-picture image data stored in the database unit 121.

In S313, the degraded image generation unit 122 generates degraded images corresponding to time-series images taken out of the one moving-picture image data acquired in S312. In the present embodiment, it is assumed that a noisy image obtained by adding noise to a clean image is generated as the degraded image. The degraded image generation unit 122 associates the generated degraded image with the clean image from which it has been generated, appends time information thereto to form one set, and then stores each data set made up of these images into the database unit 121.

A series of processes shown by loop limit S314 depicts a series of processes pertaining to the training of the neural network, which is executed for the one moving-picture image data acquired in S312. That is, pairs in series each made up of a clean image and a degraded image having been generated from the targeted moving-picture image data in S313 are sequentially acquired in a time series, and the series of processes shown by loop limit S314 pertaining to the training of the neural network is performed for each of these pairs. A specific description of the content of the series of processes shown by loop limit S314 will be given below.

In S315, the image acquisition unit 110 acquires five sets each made up of a clean image and a degraded image having been generated in S313 such that these five sets are successive in a time series. When this acquisition is performed, the image acquisition unit 110 acquires, as two sets that are the earliest one and the second earliest one of these five sets, those that are the same as the latest one and the second latest one of successive sets that were acquired when image processing was performed at the preceding time. However, in a case where the set corresponding to the time for which acquisition is supposed to be performed does not exist, the image acquisition unit 110 excludes this set from the target of acquisition. Through the process described above, the image acquisition unit 110 performs set acquisition for every acquisition-possible time.

Next, the image acquisition unit 110 labels a clean image included in each acquired set as a true-value image, and outputs the true-value image and the degraded image that are included in this set to each component of the training apparatus 120. Specifically, the image acquisition unit 110 takes three degraded images out of the latest one, the second latest one, and the third latest one of the sets in order, and outputs these three degraded images to the first network unit 111. Next, the image acquisition unit 110 takes four true-value images out of the second latest one, the third latest one, the fourth latest one, and the fifth latest one of the sets in order, and outputs these four true-value images to the difference calculation unit 123 and the error calculation unit 124. In a case where it is only three sets that can be acquired, for example, when image processing at the initial time is performed, the image acquisition unit 110 regards the images corresponding to the time for which the acquisition is impossible as not being existent.

Let's take a specific example. Consider a case where image processing is performed for time-series images of t = 0, 1, 2, 3, 4, 5, ... in sequence. Let s be a time at which image processing is performed. In the image processing at the start time, namely, at s = 0, an attempt is made to acquire each image data of degraded images of t = 0, 1, 2 and true-value images of t = -2, -1, 0, 1 from the sets of the time t = -2, -1, 0, 1, 2. However, at s = 0, the image data of the true-value images of t = -2, -1 does not exist; therefore, the image data of the true-value images of t = 0, 1 only is acquired. In the image processing at the next time, namely, at s = 1, an attempt is made to acquire each image data of degraded images of t = 3, 4, 5 and true-value images of t = 1, 2, 3, 4 from the sets of the time t = 1, 2, 3, 4, 5.

Next, through the series of processes from S302 to S306, image processing is performed on the degraded images having been inputted into the first network unit 111 in S315, and, as a result, denoised images are obtained as quality-enhanced images. Since the series of processes from S302 to S306 performed here is substantially the same as the series of processes from S302 to S306 illustrated in Fig. 3A, a detailed explanation thereof is not given.

In a case where a dummy image is used as the quality-enhanced image at the preceding time, for example, a dummy image that has a value of zero at each pixel and has the same width, the same height, and the same number of channels as those of the quality-enhanced image corresponding thereto is used. However, the dummy image does not necessarily have to have a value of zero at each pixel as long as it has the same width, the same height, and the same number of channels as those of the quality-enhanced image used as the input. In a case where a plurality of images corresponding to the same time exist among images inputted into the second network unit 112, the result of synthesizing these images corresponding to the same time is inputted into the second network unit 112. An example of a method of synthesizing the plurality of images at this time is to add up pixel values of each image on a channel-by-channel basis and then generate an image whose pixel value is an average of channel-by-channel values. Of course, the image synthesis method described here is just an example. Any method may be used as long as it is possible to keep the same width, the same height, and the same number of channels as those of the quality-enhanced image that is the source of the synthesis in the result of the synthesis.

In S316, the difference calculation unit 123 generates true-value subtraction images by using the true-value images that are successive in a time series and are acquired from the image acquisition unit 110. At this time, the difference calculation unit 123 generates the subtraction images by calculating the time-to-time differences similarly to the first embodiment described earlier.

The difference calculation unit 123 according to the present embodiment acquires four quality-enhanced images that are successive in a time series by using three quality-enhanced images that are successive in a time series and are outputted in image processing at a certain time and one of three quality-enhanced images that were outputted in image processing at the preceding time. By using these four quality-enhanced images, the difference calculation unit 123 calculates the image-to-image differences similarly to the first embodiment described earlier, thereby generating three subtraction images. As a specific example, in the image processing at s = 1, image data of three denoised images (quality-enhanced images) corresponding respectively to t = 2, 3, 4 are outputted. In the image processing at the preceding time, namely, s = 0, image data of three denoised images (quality-enhanced images) corresponding respectively to t = -1, 0, 1 are outputted. In this case, it follows that the difference calculation unit 123 generates three quality-enhanced-image subtraction images by calculating the time-to-time differences by using the denoised images (quality-enhanced images) of t = 1, 2, 3, 4.

In addition, the difference calculation unit 123 acquires image data of true-value images of the time corresponding to the quality-enhanced-image subtraction images. Then, the difference calculation unit 123 generates three true-value subtraction images similarly as done in the above-described generation of the quality-enhanced-image subtraction images.

In S317, the error calculation unit 124 calculates an error that is to be used for updating the parameters of the neural network.

Based on a relational expression shown as Equation 7 below, the image reconstruction error $L_i$ is calculated as an L1 error using the quality-enhanced image $\hat{I}_t$ that is the output of the second network unit 112 and the true-value image at the same time $I_t$. At this time, the error calculation unit 124 calculates, as a final error value, a sum of L1 errors calculated from the images of each time by using the three quality-enhanced images outputted in one execution of image processing and true-value images corresponding to this time.

$$L_i = \sum \left| I_t - \hat{I}_t \right| \qquad (\,7\,)$$

Based on the quality-enhanced-image subtraction image $\hat{I}_{diff}$ and the true-value subtraction image $I_{diff}$, the interframe difference error Lf is calculated as an L1 error expressed by a relational expression shown as Equation 8 below similarly to the first embodiment. Note that M in Equation 8 denotes a mask that is expressed by a relational expression shown as Equation 5 in the first embodiment and is created in accordance with the difference value of the true-value subtraction image. However, since there are three subtraction images, the error calculation unit 124 calculates, as a final error value, a sum of L1 errors calculated from the quality-enhanced-image subtraction images and the true-value subtraction images corresponding to each time gap.

$$L_f = \sum M \circ \left| I_{diff} - \hat{I}_{diff} \right| \qquad (\,8\,)$$

Based on the image reconstruction error $L_i$ and the inter-frame difference error Lf described above, an error L to be used for updating the parameters of the neural network is finally calculated by means of the relational expression shown as Equation 6 similarly to the first embodiment described earlier.

In S318, the training unit 125 updates the parameters of the neural network of each of the first network unit 111 and the second network unit 112 by means of an error back-propagation method using the error calculated in S317.

By repeating the series of processes from S311 to S318 described above, the neural network configured to perform image processing such as quality enhancement on an image represented by image data that is the target is trained.

As described above, in the training of a neural network configured to sequentially accept, as inputs, a series of images that are successive in a time series and perform image processing thereon, the present embodiment makes it easier to learn a corresponding relationship between the images that are successive in the time series, that is, to learn spatio-temporal information. Therefore, even in a situation where image processing is applied to a series of images that are successive in a time series as in a moving picture, it is possible to expect an effect of suppressing manifestation of a phenomenon that artifacts arising in the images look fluctuating. Moreover, according to the present embodiment, since image processing is applied to a plurality of images together, an effect of making the processing speed of image processing higher can be expected, as compared with a case where a series of processed images (for example, a movie) is generating while performing image processing one by one.

First Variation Example

A first variation example of each embodiment of the present disclosure will now be described. Described in this variation example, as a modified version of the second embodiment described above, is an example of a configuration in which, in image processing at a certain time and image processing at the next time that are successive, a quality-enhanced image of an identical timing is not included in quality-enhanced images outputted from the second network unit 112.

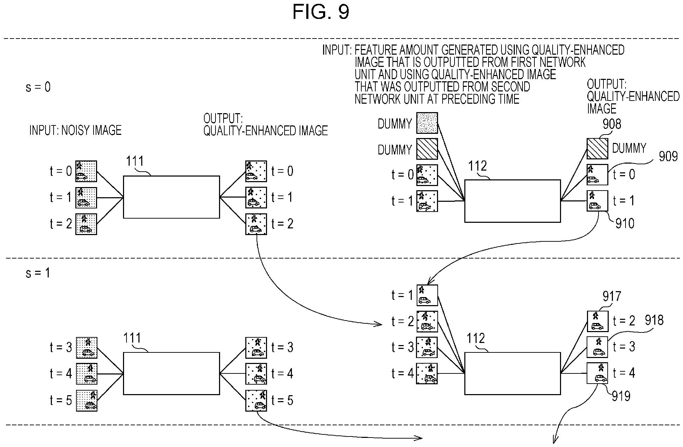

Fig. 9 is a diagram illustrating an example of a neural network configuration applied to the first network unit 111 and the second network unit 112 according to this variation example. In the neural network configuration according to the second embodiment described above, a denoised image (quality-enhanced image) of t = 1 that is an output of the second network unit 112 is outputted both in image processing at s = 0 and image processing at s = 1 that are successive. By contrast, in the configuration illustrated in Fig. 9, in the image processing at s = 0, a dummy denoised image 908 of t = -1, a denoised image 909 of t = 0, and a denoised image 910 of t = 1 can be obtained as quality-enhanced images outputted from the second network unit 112. In the image processing at s = 1, a denoised image 917 of t = 2, a denoised image 918 of t = 3, and a denoised image 919 of t = 4 can be obtained as quality-enhanced images outputted from the second network unit 112.

This configuration makes it possible to eliminate a duplicative quality-enhanced image output in image processing at a certain time and image processing at the next time that are successive. With this configuration, in comparison with the configuration according to the second embodiment, it is possible to increase the number of images outputted by one execution of image processing when a series of images (for example, a movie) is generating while performing image processing sequentially. Accordingly, an increase in the processing speed of image processing can be expected. Second Variation Example

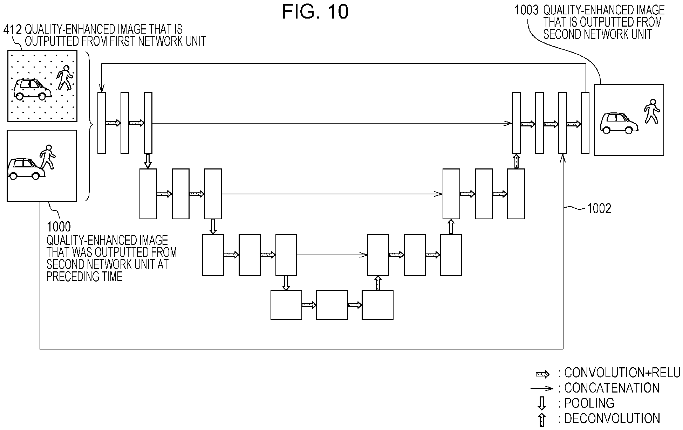

A second variation example of each embodiment of the present disclosure will now be described. In this variation example, an example of a modified version of the neural network applied to the second network unit 112 described in the first embodiment and the second embodiment earlier will be described. Fig. 10 is a diagram illustrating an example of the configuration of a neural network applied to the second network unit 112 according to this variation example.

In the neural network illustrated in Fig. 10, a quality-enhanced image 1000 of the second network unit 112 corresponding to the preceding time, which is used as an input, is merged along the channel axis by skip concatenation 1002 with a quality-enhanced image that is the result of image processing performed by the second network unit 112 at the current time. After that, the second network unit 112 applies convolution operation and ReLU function operation to the merged quality-enhanced image, and outputs the result thereof as a quality-enhanced image 1003.

When this configuration is applied, the quality-enhanced image 1000, which is the image processing result at the preceding time, is directly synthesized with the quality-enhanced image that is the image processing result at the current time, resulting in a further enhanced effect of suppressing fluctuations.

Third Variation Example

A third variation example of each embodiment of the present disclosure will now be described. In this variation example, as an example of a modified version of the neural network described in the first embodiment and the second embodiment earlier, a configuration that additionally includes a noise estimation network unit configured to estimate noise manifested in an input image will be described.

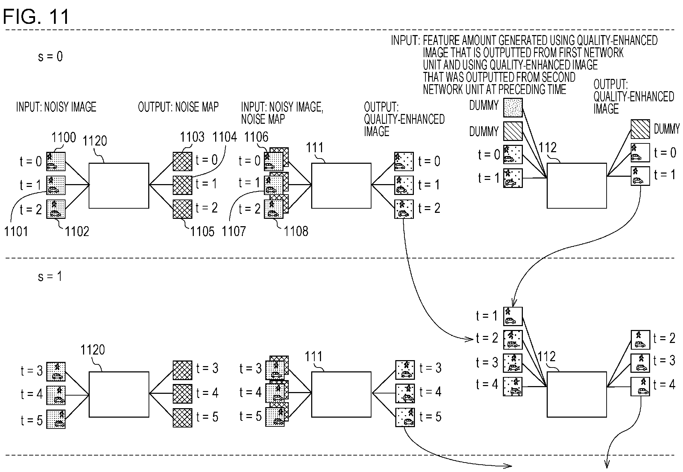

A detailed explanation of the noise estimation network unit is not given because the configuration disclosed in "Toward Convolutional Blind Denoising of Real Photographs, Shi Guo et al., 2019" can be applied thereto. Fig. 11 is a diagram illustrating an example of a neural network configuration according to this variation example. The neural network configuration illustrated in Fig. 11 is different from the neural network configuration described in the first variation example above in that it additionally includes a noise estimation network unit 1120.

Image processing at s = 0 will now be described. First, the noise estimation network unit 1120 receives, as an input, a noisy image 1100 of t = 0, a noisy image 1101 of t = 1, and a noisy image 1102 of t = 2, which are time-series images, and performs noise estimation processing thereon.

As the result of the noise estimation, the noise estimation network unit 1120 outputs noise maps for the inputted time-series images respectively. In the example illustrated in Fig. 10, a noise map 1103 of t = 0, a noise map 1104 of t = 1, and a noise map 1105 of t = 2 are outputted. The noise map in this variation example is a map in which noise intensity of the inputted noisy image is associated as pixel values with positions in this noisy image.

After that, the first network unit 111 takes, as an input, image data of a feature amount obtained by concatenating the noisy image with the noise map along the channel axis for each time in a time series, and performs image processing thereon. Specifically, for t = 0, the noisy image 1100 is concatenated with the noise map 1103 along the channel axis. Similarly, for t = 1, the noisy image 1101 is concatenated with the noise map 1104. Similarly, for t = 2, the noisy image 1102 is concatenated with the noise map 1105. Feature amounts 1106, 1107, and 1108 obtained by concatenating the noisy images with the noise maps along the channel axis for the respective times in the time series are further merged along the channel axis to generate a feature amount, and image data that represents this feature amount is an input for image processing performed by the first network unit 111.

Subsequent processing ending with outputting image data of the processed images (for example, quality-enhanced images) from the second network unit 112 is substantially the same as that of each embodiment described earlier and each variation example described above.

Applying the configuration described above makes it possible to cause the neural network to learn image characteristics represented by the noise map. Therefore, for example, a further enhancement in the quality of an image outputted as the result of image processing can be expected. Moreover, by adjusting the intensity of the noise map, it is possible to adjust the intensity of denoising applied to the input image by the neural network.

Fourth Variation Example

A fourth variation example of each embodiment of the present disclosure will now be described. Having been described in the first embodiment and the second embodiment above is an example of a training method for updating the parameters of a neural network by acquiring a plurality of still images (for example, frame images) out of a moving picture in a time series and then applying image processing thereto by the neural network sequentially. In this variation example, another training method, which is different from the foregoing training method, will be described.

Specifically, in a training method according to this variation example, image processing and error calculation processing that are performed sequentially on each of time-series images acquired out of a moving picture may be finished first. Then, a sum of a series of calculated errors may be calculated, and an error calculated as the result thereof may be used for the training of the neural network, that is, for updating the parameters of the neural network.

Applying the configuration described above makes it possible to, for example, cause the neural network to learn information that has been acquired over a longer time; therefore, a further enhancement in the quality of an image outputted as the result of image processing can be expected.

Fifth Variation Example

A fifth variation example of each embodiment of the present disclosure will now be described. Having been described in the first embodiment and the second embodiment above is an example of a case where quality-enhancing image processing such as denoising processing for removing noise manifested in an input image is performed as image processing applied to the input image by a neural network. On the other hand, the type of image processing performed by a neural network on an input image is not limited to denoising processing; the invention may be applied to any image processing as long as it applies some kind of manipulation to the input image. As a specific example, the following quality-enhancing image processing may be applied: quality-enhancing image processing for compensating for degradation due to aberration, compression, low resolution, missing, or the like or compensating for a decrease in contrast due to an influence of weather conditions at the time of image capturing such as mist/haze/fog, snow, rain, or the like.

An example will now be described about a case where deblurring processing for removing blur manifested in a target image is performed as image processing applied to the input image by a neural network. Image data of time-series images inputted into the neural network in this case is image data of so-called blurred images in which the subject is blurred. In this case, the neural network performs image processing that removes (or mitigates) the blur manifested in the input image, and outputs image data of the processed images (quality-enhanced images). Except for this difference, components and processes that are the same as or similar to those of the first embodiment and the second embodiment described earlier can be employed.

The degraded image generation unit 122 of the training apparatus suffices to be configured to generate a blurred image as a degraded image. Specifically, the degraded image generation unit 122 suffices to be configured to apply, to the target image, blur modeled from motion blur arising due to subject motion or from blur arising outside the depth of field or the like. Then, the degraded image generation unit 122 suffices to be configured to use the blur-added image as the degraded image in the first embodiment and the second embodiment described earlier, for the training of the neural network.

By performing the training of the neural network as described above, for example, it is possible to obtain a quality-enhanced image with suppression in manifestation of fluctuations while realizing deblurring as quality-enhancing image processing.

As described above, in each embodiment of the present disclosure, it is possible to cause the neural network to learn a corresponding relationship between images that are successive in a time series, not only in quality-enhancing image processing such as denoising processing but also under various conditions where various kinds of image processing are performed.

Moreover, because of these characteristics, in each embodiment of the present disclosure, it is possible to suppress manifestation of fluctuations also under various conditions where the neural network is caused to perform various kinds of image processing on images that are successive in a time series.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments, but is defined by the scope of the following claims.

**Claims**

1. An information processing apparatus (100, 700), comprising:

first image processing means (111) configured to, by inputting each of a series of image data (401, 405, 800-802, 813-814, 1100-1102) that are successive in a time series into a neural network configured to perform predetermined image processing on the inputted image data one after another, generate first image data (402, 406, 803-805, 815-817) that is image data after the predetermined image processing; and
second image processing means (112) configured to, for the first image data (402, 406, 803-805, 815-817) outputted from the first image processing means one after another in a time series, based on the neural network, generate second image data (404, 407, 810-812, 819-821, 908-910, 917-919) that is image data after the predetermined image processing, wherein
the second image processing means is configured to generate the second image data corresponding to a first time (407, 819-821, 917-919) by, as an input into the neural network at the first time, inputting:

the first image data that is outputted from the first image processing means at the first time (406, 815-817) or was outputted therefrom at a second time (402, 803-805) that is earlier than the first time, and
the second image data that was generated by the second image processing means for the first image data that was outputted from the first image processing means at the second time (404, 810-812, 908-910).

2. The information processing apparatus (100, 700) according to claim 1, wherein
the neural network is trained on a basis of an error between:

a first difference between, among a series of true-value image data that are successive in a time series, pieces of the true-value image data corresponding respectively to a first time and a second time that is earlier than the first time, and
a second difference between pieces of the second image data generated by performing the predetermined image processing on manipulated image data generated by applying a manipulation to the pieces of the true-value image data corresponding respectively to the first time and the second time, the manipulation being an image-restorable manipulation that is to be undone by the predetermined image processing.

3. The information processing apparatus (100, 700) according to claim 2, wherein
the second image data corresponding to an output of the second image processing means at the second time (404, 810-812, 908-910) is used for calculating the error.

4. The information processing apparatus (100, 700) according to any one of claims 1 to 3, wherein

the first image processing means (111) is configured to, by inputting one or more pieces of image data that represent an image (401, 405, 800-802, 813-814, 1100-1102) or a feature amount generated from the image (1106-1108) into the neural network,
generate, as the first image data (402, 406, 803-805, 815-817), one or more pieces of image data that represent the image or the feature amount to which the predetermined image processing has been applied.

5. The information processing apparatus (100, 700) according to claim 4, wherein
the second image processing means (112) is configured to generate the second image data corresponding to the first time (407, 819-821, 917-919) by, as the input into the neural network at the first time, inputting:

one or more pieces of image data that represent an image or a feature amount generated from the image and are outputted as the first image data from the first image processing means at the first time (406, 815-817), and
the second image data that was generated by the second image processing means for the first image data that was outputted from the first image processing means at the second time (404, 811, 910).

6. The information processing apparatus (100, 700) according to any one of claims 1 to 3, wherein
the first image processing means (111) is configured to, by inputting a series of image data that represent a plurality of images (800-802, 813-814, 1100-1102) that are successive in a time series or a plurality of feature amounts (1103-1105) generated from the plurality of images respectively into the neural network, generate, as the first image data (803-805, 815-817), a series of image data that represent the plurality of images or the plurality of feature amounts to which the predetermined image processing has been applied.

**7.** The information processing apparatus (100, 700) according to claim 6, wherein
the second image processing means (112) is configured to generate the second image data corresponding to the first time (819-821, 917-919) by, as the input into the neural network at the first time, inputting:

a series of image data that represent a plurality of images that are successive in a time series or a plurality of feature amounts generated from the plurality of images and are outputted as the first image data from the first image processing means (111) at the first time (815-817), and
the second image data that was generated by the second image processing means (112) for the first image data that was outputted from the first image processing means at the second time (810-812).

**8.** The information processing apparatus (100, 700) according to any one of claims 1 to 7, wherein

the second image processing means (112) is configured to use,
as the second image data that is inputted into the neural network at the first time (811,910),
the second image data that was generated by the second image processing means (112) for the first image data that was outputted from the first image processing means (111) at the second time (803-805).

**9.** A training apparatus (120, 701), comprising: at least one memory (102, 104) storing instructions; and at least one processor (101) that, upon execution of the stored instructions, causes the training apparatus (120, 701) to function as:

manipulated image data generation means (122) configured to generate a series of manipulated image data by performing first image processing on each of a series of true-value image data that are successive in a time series;
first image processing means (111) configured to, by inputting each of the series of manipulated image data into a neural network configured to perform second image processing on the inputted data one after another, generate first image data that is image data after the second image processing;
second image processing means (112) configured to, for the first image data outputted from the first image processing means one after another in a time series, based on the neural network, generate second image data that is image data after the second image processing;
difference calculation means (123) configured to calculate a first difference and a second difference, the first difference being a difference between pieces of the true-value image data corresponding respectively to a first time and a second time that is earlier than the first time, the second difference being a difference between pieces of the second image data generated by performing the second image processing on the manipulated image data generated from the pieces of the true-value image data corresponding respectively to the first time and the second time;
error calculation means (124) configured to calculate an error between the first difference and the second difference; and
training means (125) configured to, based on the error, perform a training of the neural network for each of the first image processing means and the second image processing means, wherein
the second image processing means is configured to generate the second image data corresponding to the first time (819-821, 917-919) by, as an input into the neural network at the first time, inputting:

the first image data that is outputted from the first image processing means at the first time (815) or was outputted therefrom at the second time (804-805), and
the second image data that was generated by the second image processing means for the first image data that was outputted from the first image processing means at the second time (811, 910).

**10.** The training apparatus (120, 701) according to claim 9, wherein
the error calculation means (124) calculates, as the error, an L1 error between the first difference and the second difference.

**11.** The training apparatus (120, 701) according to claim 9 or 10, wherein
the training means (125) performs the training of the neural network on a basis of an error back-propagation method using the error.

**12.** The training apparatus (120, 701) according to any one of claims 9 to 11, wherein
the error calculation means (124) performs weighting such that a heavier weight is assigned to an error of a portion where a change between the pieces of the true-value image data corresponding respectively to the first time and the second time is smaller.

13. The training apparatus (120, 701) according to any one of claims 9 to 11, wherein
the error calculation means (124) performs weighting such that a heavier weight is assigned to an error of a portion where a change between the pieces of the true-value image data corresponding respectively to the first time and the second time is larger.

14. A program comprising instructions which, when executed by a computer, cause the computer to carry out:

a first image processing step, by inputting each of a series of image data (401, 405, 800-802, 813-814, 1100-1102) that are successive in a time series into a neural network configured to perform predetermined image processing on the inputted image data one after another, for generating first image data (402, 406, 803-805, 815-817) that is image data after the predetermined image processing; and
a second image processing step, for the first image data (402, 406, 803-805, 815-817) outputted from the first image processing step one after another in a time series, based on the neural network, for generating second image data (404, 407, 810-812, 819-821, 908-910, 917-919) that is image data after the predetermined image processing, wherein
the second image processing step generates the second image data corresponding to a first time (407, 819-821, 917-919) by, as an input into the neural network at the first time, inputting:

the first image data that is outputted from the first image processing step at the first time (406, 815-817) or was outputted therefrom at a second time (402, 803-805) that is earlier than the first time, and
the second image data that was generated by the second image processing step for the first image data that was outputted from the first image processing step at the second time (404, 810-812, 908-910).

15. A program comprising instructions which, when the program is executed by a computer, cause the computer to carry out:

a manipulated image data generation step for generating a series of manipulated image data by performing first image processing on each of a series of true-value image data that are successive in a time series;
a first image processing step, by inputting each of the series of manipulated image data into a neural network configured to perform second image processing on the inputted data one after another, for generating first image data that is image data after the second image processing;
a second image processing step, for the first image data outputted from the first image processing one after another in a time series, based on the neural network, for generating second image data that is image data after the second image processing;
a difference calculation step for calculating a first difference and a second difference, the first difference being a difference between pieces of the true-value image data corresponding respectively to a first time and a second time that is earlier than the first time, the second difference being a difference between pieces of the second image data generated by performing the second image processing on the manipulated image data generated from the pieces of the true-value image data corresponding respectively to the first time and the second time;
an error calculation step for calculating an error between the first difference and the second difference; and
a training step, based on the error, for performing a training of the neural network for each of the first image processing step and the second image processing step, wherein
the second image processing step generates the second image data corresponding to the first time (819-821, 917-919) by, as an input into the neural network at the first time, inputting:

the first image data that is outputted from the first image processing step at the first time (815) or was outputted therefrom at the second time (804-805), and
the second image data that was generated by the second image processing step for the first image data that was outputted from the first image processing step at the second time (811, 910).

# FIG. 1

```
        101              102              103
      ┌───────┐       ┌───────┐       ┌───────┐
      │  CPU  │       │MEMORY │       │ INPUT │
      │       │       │       │       │ UNIT  │
      └───┬───┘       └───┬───┘       └───┬───┘
          │               │               │
 ─────────┼───────┬───────┼───────┬───────┼───────┬──────
          │       │               │               │
              ┌───┴────┐      ┌───┴────┐   ┌───────┴──────┐
              │STORAGE │      │ OUTPUT │   │COMMUNICATION │
              │ UNIT   │      │  UNIT  │   │    UNIT      │
              └────────┘      └────────┘   └──────────────┘
                  104             105             106
```

# FIG. 2A

IMAGE CAPTURING APPARATUS — 200

IMAGE ACQUISITION UNIT — 110

FIRST NETWORK UNIT — 111

SECOND NETWORK UNIT — 112

INFORMATION PROCESSING APPARATUS

100

# FIG. 2B

DATABASE UNIT — 121

IMAGE ACQUISITION UNIT — 110

DEGRADED IMAGE GENERATION UNIT — 122

FIRST NETWORK UNIT — 111

SECOND NETWORK UNIT — 112

DIFFERENCE CALCULATION UNIT — 123

ERROR CALCULATION UNIT — 124

TRAINING UNIT — 125

TRAINING APPARATUS

120

# FIG. 3A

```
                    ┌──────────────┐
                    │    START     │
                    └──────┬───────┘
                           │
                           ▼
          ╱─────────────────────────────╲
         ╱  ACQUISITION OF NOISY IMAGE    ╲──── S301
         ╲_____╱
                           │
                           ▼
              ┌─────────────────────────┐
              │   IMAGE PROCESSING BY   │──── S302
              │    FIRST NETWORK UNIT   │
              └────────────┬────────────┘
                           │
                           ▼
                                          S303
                    ╱──────────────╲
                   ╱  DOES IMAGE    ╲
         ┌────────   PROCESSING RESULT AT   ────────┐
         │         ╲  PRECEDING TIME  ╱             │
         │          ╲    EXIST?      ╱              │
         │           ╲──────────────╱               │
         │                                          │
         │  S304                          S305      │
         ▼                                          ▼
 ┌──────────────────────┐      ┌──────────────────────────┐
 │ ACQUISITION OF IMAGE │      │  GENERATION OF DUMMY OF  │
 │ PROCESSING RESULT AT │      │  IMAGE PROCESSING RESULT │
 │   PRECEDING TIME     │      │    AT PRECEDING TIME     │
 └──────────┬───────────┘      └────────────┬─────────────┘
            │                               │
            ▼◄──────────────────────────────┘
 ┌──────────────────────┐
 │  IMAGE PROCESSING BY │──── S306
 │  SECOND NETWORK UNIT │
 └──────────┬───────────┘
            │
            ▼
      ┌──────────┐
      │   END    │
      └──────────┘
```

# FIG. 3B

```
                    ( START )
                        │
                        ▼
        ┌───────────────────────────────┐
        │      TRAINING OF MODEL         │── S311
        └───────────────────────────────┘
                        │
                        ▼
        ┌───────────────────────────────┐
        │ ACQUISITION OF MOVIE FOR TRAINING │── S312
        └───────────────────────────────┘
                        │
                        ▼
        ┌───────────────────────────────┐
        │   GENERATION OF DEGRADED IMAGE │── S313
        └───────────────────────────────┘
                        │
                        ▼
        ┌───────────────────────────────┐
        │ TRAINING PROCESSING OF ONE MOVIE │── S314
        └───────────────────────────────┘
                        │
                        ▼
        ┌───────────────────────────────┐
        │     ACQUISITION OF IMAGE        │── S315
        └───────────────────────────────┘
                        │
                        ▼
        ┌───────────────────────────────┐
        │      IMAGE PROCESSING BY        │── S302
        │      FIRST NETWORK UNIT         │
        └───────────────────────────────┘
                        │
                        ▼        S303
              ◇ DOES IMAGE ◇
              PROCESSING RESULT AT ───────────────┐
              PRECEDING TIME                       │
              EXIST?                               │
                        │                  S305    ▼
                        │          ┌──────────────────────────┐
                  S304  │          │ GENERATION OF DUMMY OF    │
                        ▼          │ IMAGE PROCESSING RESULT   │
        ┌───────────────────────┐ │ AT PRECEDING TIME         │
        │ ACQUISITION OF IMAGE   │ └──────────────────────────┘
        │ PROCESSING RESULT AT   │              │
        │ PRECEDING TIME         │              │
        └───────────────────────┘              │
                        │◄─────────────────────┘
                        ▼
        ┌───────────────────────────────┐
        │      IMAGE PROCESSING BY        │── S306
        │      SECOND NETWORK UNIT        │
        └───────────────────────────────┘
                        │
                        ▼
        ┌───────────────────────────────┐
        │     DIFFERENCE CALCULATION      │── S316
        └───────────────────────────────┘
                        │
                        ▼
        ┌───────────────────────────────┐
        │       ERROR CALCULATION         │── S317
        └───────────────────────────────┘
                        │
                        ▼
        ┌───────────────────────────────┐
        │     UPDATING OF PARAMETERS      │── S318
        └───────────────────────────────┘
                        │
                        ▼
        ┌───────────────────────────────┐
        │ TRAINING PROCESSING OF ONE MOVIE │
        └───────────────────────────────┘
                        │
                        ▼
        ┌───────────────────────────────┐
        │      TRAINING OF MODEL         │
        └───────────────────────────────┘
                        │
                        ▼
                    (  END  )
```

# FIG. 4

s = 0

INPUT: FEATURE AMOUNT GENERATED USING QUALITY-ENHANCED IMAGE THAT IS OUTPUTTED FROM FIRST NETWORK UNIT AND USING QUALITY-ENHANCED IMAGE THAT WAS OUTPUTTED FROM SECOND NETWORK UNIT AT PRECEDING TIME

INPUT: NOISY IMAGE

OUTPUT: QUALITY-ENHANCED IMAGE

OUTPUT: QUALITY-ENHANCED IMAGE

401

402

t = 0

t = 0

111

403

DUMMY

112

404

t = 0

402

t = 0

s = 1

405

406

t = 1

t = 1

111

404

112

407

t = 0

t = 1

406

t = 1

FIG. 5

502 QUALITY-ENHANCED IMAGE
THAT IS OUTPUTTED FROM
FIRST NETWORK UNIT

501

511

512

514

513

515

⇨ : CONVOLUTION+RELU
⟶ : CONCATENATION
⇩ : POOLING
⇧ : DECONVOLUTION

FIG. 6

502 QUALITY-ENHANCED IMAGE THAT IS
OUTPUTTED FROM FIRST NETWORK UNIT

602 QUALITY-ENHANCED IMAGE
THAT IS OUTPUTTED FROM
SECOND NETWORK UNIT

601
QUALITY-ENHANCED
IMAGE THAT WAS
OUTPUTTED FROM
SECOND NETWORK UNIT
AT PRECEDING TIME

611

⇒ : CONVOLUTION+RELU
⟶ : CONCATENATION
⇓ : POOLING
⇑ : DECONVOLUTION

EP 4 517 652 A1

## FIG. 7A

INFORMATION PROCESSING APPARATUS — 200

IMAGE ACQUISITION UNIT — 110

104 — STORAGE UNIT

FIRST NETWORK UNIT — 111

SECOND NETWORK UNIT — 112

IMAGE CAPTURING APPARATUS

700

## FIG. 7B

DATABASE UNIT — 121

IMAGE ACQUISITION UNIT — 110

DEGRADED IMAGE GENERATION UNIT — 122

FIRST NETWORK UNIT — 111

STORAGE UNIT — 104

SECOND NETWORK UNIT — 112

DIFFERENCE CALCULATION UNIT — 123

ERROR CALCULATION UNIT — 124

TRAINING UNIT — 125

TRAINING APPARATUS

701

30

## FIG. 8

INPUT: FEATURE AMOUNT GENERATED USING QUALITY-ENHANCED
IMAGE THAT IS OUTPUTTED FROM FIRST NETWORK
UNIT AND USING QUALITY-ENHANCED IMAGE
THAT WAS OUTPUTTED FROM SECOND
NETWORK UNIT AT PRECEDING TIME

s = 0

DUMMY 808

OUTPUT:
QUALITY-ENHANCED
IMAGE

INPUT: NOISY IMAGE

OUTPUT:
QUALITY-ENHANCED IMAGE

DUMMY 806

807 DUMMY

810

800

803

DUMMY 811

t = 0    111

t = 0

t = 0    112    t = 0

t = 1

t = 1    804

809    t = 1

t = 1

801    t = 2    802

t = 2    805

804

812

s = 1

811

t = 0

802    111

815

804

819

t = 2    t = 2

t = 1    112    t = 1    820

t = 3    816

t = 2

t = 2

813    t = 4    814

t = 3    817    t = 4

818    t = 3    816

821    t = 3

# FIG. 9

INPUT: FEATURE AMOUNT GENERATED USING QUALITY-ENHANCED
IMAGE THAT IS OUTPUTTED FROM FIRST NETWORK
UNIT AND USING QUALITY-ENHANCED IMAGE
THAT WAS OUTPUTTED FROM SECOND
NETWORK UNIT AT PRECEDING TIME

s = 0

INPUT: NOISY IMAGE

OUTPUT:
QUALITY-ENHANCED IMAGE

OUTPUT:
QUALITY-ENHANCED
IMAGE

DUMMY

DUMMY

908

909 DUMMY

111

112

910

s = 1

917

918

919

111

112

# FIG. 10

412 QUALITY-ENHANCED IMAGE THAT IS OUTPUTTED FROM FIRST NETWORK UNIT

1003 QUALITY-ENHANCED IMAGE THAT IS OUTPUTTED FROM SECOND NETWORK UNIT

1000 QUALITY-ENHANCED IMAGE THAT WAS OUTPUTTED FROM SECOND NETWORK UNIT AT PRECEDING TIME

1002

⇒ : CONVOLUTION+RELU
→ : CONCATENATION
⇓ : POOLING
⇑ : DECONVOLUTION

EP 4 517 652 A1

FIG. 11

s = 0

INPUT: FEATURE AMOUNT GENERATED USING QUALITY-ENHANCED
IMAGE THAT IS OUTPUTTED FROM FIRST NETWORK
UNIT AND USING QUALITY-ENHANCED IMAGE
THAT WAS OUTPUTTED FROM SECOND
NETWORK UNIT AT PRECEDING TIME

OUTPUT:
QUALITY-ENHANCED
IMAGE

INPUT: NOISY IMAGE          OUTPUT: NOISE MAP      INPUT: NOISY IMAGE,      OUTPUT:              DUMMY
                                                   NOISE MAP            QUALITY-ENHANCED
                                                                        IMAGE                DUMMY

1100  1120          1103  1104  1106          111              DUMMY
t = 0              t = 0    t = 0                              t = 0    t = 0
t = 1              t = 1    t = 1                              t = 1    t = 1
t = 2              t = 2    t = 2                                       t = 2
1101    1102        1105  1107    1108

s = 1

1120                                    111                    112
t = 3              t = 3    t = 3                              t = 1
t = 4              t = 4    t = 4                              t = 2    t = 2
t = 5              t = 5    t = 5                              t = 3    t = 3
                                                              t = 4    t = 4
                                                                       t = 5

34

| | Europäisches Patentamt European Patent Office Office européen des brevets | **EUROPEAN SEARCH REPORT** | | Application Number EP 24 19 3664 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/398700 A1 (K S GREEN ROSH [IN] ET AL) 15 December 2022 (2022-12-15) <br> * abstract * <br> * paragraph [0063] - paragraph [0066] * <br> * paragraph [0078] - paragraph [0080] * <br> * paragraph [0083] * <br> * figure 4 * <br> ----- | 1-15 | INV. G06T5/60 G06N3/045 |
| X | US 2020/126192 A1 (MUNKBERG CARL JACOB [SE] ET AL) 23 April 2020 (2020-04-23) <br> * abstract * <br> * paragraph [0065] - paragraph [0099] * <br> * figures 2D, 2G * <br> ----- | 1-15 | |
| X | US 2019/180469 A1 (GU JINWEI [US] ET AL) 13 June 2019 (2019-06-13) <br> * abstract * <br> * paragraph [0020] - paragraph [0050] * <br> * figures 1B, 1C, 2E, 2F * <br> ----- | 1-15 | |
| | | | **TECHNICAL FIELDS SEARCHED (IPC)** <br><br> G06T <br> G06N |

The present search report has been drawn up for all claims

| Place of search | Date of completion of the search | Examiner |
|---|---|---|
| Munich | 19 December 2024 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**EP 4 517 652 A1**

## ANNEX TO THE EUROPEAN SEARCH REPORT
## ON EUROPEAN PATENT APPLICATION NO.

EP 24 19 3664

19-12-2024

| Patent document cited in search report | Publication date | Patent family member(s) | Publication date |
|---|---|---|---|
| US 2022398700 A1 | 15-12-2022 | CN 117044215 A<br>EP 4248657 A1<br>US 2022398700 A1 | 10-11-2023<br>27-09-2023<br>15-12-2022 |
| US 2020126192 A1 | 23-04-2020 | NONE | |
| US 2019180469 A1 | 13-06-2019 | CN 110046537 A<br>DE 102018130924 A1<br>US 2019180469 A1 | 23-07-2019<br>13-06-2019<br>13-06-2019 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023035928 A

**Non-patent literature cited in the description**

- **MATTEO MAGGIONI et al.** *Efficient Multi-Stage Video Denoising with Recurrent Spatio-Temporal Fusion*, 2021

- **MINGYANG SONG et al.** *TempFormer: Temporally Consistent Transformer for Video Denoising*, 2022
- **SHI GUO et al.** *Toward Convolutional Blind Denoising of Real Photographs*, 2019